# EUROPEAN PATENT SPECIFICATION

(11) **EP 3 036 583 B1**
(45) Date of publication and mention of the grant of the patent: **06.05.2020**
(21) Application number: 14767151.5
(22) Date of filing: 05.08.2014
(51) Int. Cl.: G02F 1/09, G02F 1/167, G09F 9/37, B43L 1/00

(54) **DISPLAY UNIT**
ANZEIGEEINHEIT
UNITÉ D'AFFICHAGE

(30) Priority: 23.08.2013 JP 2013173593
(43) Date of publication of application: 29.06.2016
(73) Proprietor: Sony Corporation, Tokyo 108-0075 (JP)
(72) Inventor: EBISUI, Akira, Tokyo 108-0075 (JP); KAWAGUCHI, Hiroto, Tokyo 108-0075 (JP); TAKANASHI, Hidehiko, Tokyo 108-0075 (JP)
(74) Representative: Witte, Weller & Partner Patentanwälte mbB
(86) International application number: PCT/JP2014/004088
(87) International publication number: WO 2015/025491

(56) References cited:
- FR-A1- 2 981 084
- JP-A- 2003 195 365
- JP-A- 2008 116 513
- US-B1- 6 574 034

## Description

### Technical Field

The present technology relates to a display unit which enables drawings to be made on its display surface by using a pen with a magnetic nib.

### Background Art

Currently, some known display units enable drawings to be made on their display surfaces by using pens with a magnetic nib. One exemplary display unit has a plurality of microcapsules arranged under its display surface; each microcapsule containing a dispersion medium in which a white pigment and magnetic particles are dispersed. These magnetic particles are drawn to the display surface due to a magnetic field emitted from the magnet in the pen nib. In this way, a drawing is made on the display surface. The drawing made in this manner is erased, for example, by sliding a magnet along the rear surface.

US 6,574,034 B1 discloses fluid compositions for use in an electrophoretic display device, electrophoretic display devices containing such display fluids, and methods of display images for the electrophoretic display devices. The electrophoretic display device includes magnetic particles in the display fluid. The device includes an additional layer of a magnetic material under the display to generate a magnetic force. FR 2 981 084 A1 discloses an electrophoretic display which enables multi-color displays. The device comprises an electrode and an opposite electrode, wherein the cavity between the electrodes is filled with an electrophoretic polychrome ink. The polychrome ink comprises magnetic particles.

A display unit according to the preamble of claim 1 is known from JP 2008-116513 A which discloses an electrophoresis display sheet, wherein information inputted on a display screen by a method such as manual input can be additionally displayed with a hue different from that of display by electrophoresis particles and with high definition.

### Citation List

### Patent Literature

PTL 1: JP 2003-195365 A

### Summary

### Technical Problem

The erasing method described above, however, has difficulty clearing the overall display surface at one time, and disadvantageously some drawings that would be erased may be left unerased. Patent Literature 1 discloses a method of partially erasing a created drawing by disposing a magnet at a preset distance away from the display surface with its N and S poles directed in parallel directions to the display surface. Unfortunately, this method has a disadvantage in that drawings may be left unerased, because the lines of magnetic force that pass through the microcapsules are parallel to the display surface.

It is desirable to provide a display unit that is capable of clearing an overall surface at one time, and reducing a risk that drawings may be left unerased.

### Solution to Problem

According to the invention, a display unit according to claim 1 is provided. A display unit according to an embodiment of the present technology includes: a pair of substrates arranged opposite and away from each other; a display layer disposed in a gap between the pair of substrates; an electrode configured to apply an electric field to the display layer; and a pen having a magnet at its end. The display layer is configured to change its display, depending on changes in a magnetic field and the electric field.

In the display unit according to the embodiment of the present technology, the display layer changes its display by virtue of the magnetic and electric fields input from the pen and the electrode, respectively. It is therefore possible to utilize the electric field input from the electrode when erasing a display on the display layer.

In another embodiment, a display device includes a first electrode layer electrically connected to a second electrode layer, and a display layer formed between the first and second electrode layers, the display layer including a plurality of magnetic particles and nonmagnetic particles. At least one particle type of the magnetic particles and the nonmagnetic particles is electrically modified to enable movement of said particle type within the display layer in response to an electric field applied between the first and second electrode layers.

In another embodiment, a method of manufacturing a display device, the method includes forming a first electrode layer electrically connected to a second electrode layer, and forming a display layer formed between the first and second electrode layers, the display layer including a plurality of magnetic particles and nonmagnetic particles. At least one particle type of the magnetic particles and the nonmagnetic particles is electrically modified to enable movement of said particle type within the display layer in response to an electric field applied between the first and second electrode layers.

In another embodiment, an electronic apparatus includes a sensor device, and a display device formed adjacent to and operable in conjunction with the sensor device. The display device includes a first electrode layer electrically connected to a second electrode layer, and a display layer formed between the first and second electrode layers, the display layer including a plurality of magnetic particles and non-magnetic particles. At least one particle type of the magnetic particles and the non-magnetic particles is electrically modified to enable movement of said particle type within the display layer in response to an electric field applied between the first and second electrode layers.

### Advantageous Effects of Invention

According to the display unit in the embodiment of the present technology, it is possible to utilize an electric field input from the electrode when erasing a display on the display layer. This makes it possible to clear the overall surface at one time, and to reduce a risk that drawings may be left unerased, compared with utilizing a magnetic field to clear the surface.

It is to be understood that both the foregoing general description and the following detailed description are exemplary, and are intended to provide further explanation of the technology as claimed.

### Brief Description of Drawings

[fig.1]FIG. 1 is a view showing an exemplary cross-sectional configuration of a display unit according to a first embodiment of the present technology.
[fig.2]FIG. 2 is a view showing an exemplary perspective view of electrodes in FIG. 1.
[fig.3]FIG. 3 is a view showing an exemplary perspective view of the electrodes in FIG. 1.
[fig.4]FIG. 4 is a view showing an exemplary perspective view of the electrodes in FIG. 1.
[fig.5]FIG. 5 is a view showing an exemplary cross-sectional configuration of a display pixel in FIG. 1.
[fig.6]FIG. 6 is a view showing an exemplary behavior of a display layer in FIG. 1 when a magnetic field is input into the display layer.
[fig.7A]FIG. 7A is a view showing an exemplary behavior of the display layer in FIG. 1 when an electric field is input into the display layer.
[fig.7B]FIG. 7B is a view showing an exemplary behavior of the display layer in FIG. 1 when an electric field is input into the display layer.
[fig.7C]FIG. 7C is a view showing an exemplary behavior of the display layer in FIG. 1 when an electric field is input into the display layer.
[fig.7D]FIG. 7D is a view showing an exemplary behavior of the display layer in FIG. 1 when an electric field is input into the display layer.
[fig.7E]FIG. 7E is a view showing an exemplary behavior of the display layer in FIG. 1 when an electric field is input into the display layer.
[fig.8A]FIG. 8A is a view showing an exemplary behavior of the display layer in FIG. 1 when an electric field is input into the display layer.
[fig.8B]FIG. 8B is a view showing an exemplary behavior of the display layer in FIG. 1 when an electric field is input into the display layer.
[fig.8C]FIG. 8C is a view showing an exemplary behavior of the display layer in FIG. 1 when an electric field is input into the display layer.
[fig.8D]FIG. 8D is a view showing an exemplary behavior of the display layer in FIG. 1 when an electric field is input into the display layer.
[fig.8E]FIG. 8E is a view showing an exemplary behavior of the display layer in FIG. 1 when an electric field is input into the display layer.
[fig.9A]FIG. 9A is a view showing an exemplary behavior of the display layer in FIG. 1 when an electric field is input into the display layer.
[fig.9B]FIG. 9B is a view showing an exemplary behavior of the display layer in FIG. 1 when an electric field is input into the display layer.
[fig.9C]FIG. 9C is a view showing an exemplary behavior of the display layer in FIG. 1 when an electric field is input into the display layer.
[fig.9D]FIG. 9D is a view showing an exemplary behavior of the display layer in FIG. 1 when an electric field is input into the display layer.
[fig.9E]FIG. 9E is a view showing an exemplary behavior of the display layer in FIG. 1 when an electric field is input into the display layer.
[fig.10]FIG. 10 is a view showing an exemplary cross-sectional configuration of a display unit according to a second embodiment of the present technology.
[fig.11]FIG. 11 is a view showing an exemplary cross-sectional configuration of a display pixel in FIG. 10, along a plane parallel to an XZ plane.
[fig.12]FIG. 12 is a view showing an exemplary cross-sectional configuration of the display pixel in FIG. 10, along a plane parallel to an XY plane.
[fig.13]FIG. 13 is a view showing a modified cross-sectional configuration of the display pixel in FIG. 10, along the plane parallel to the XY plane.
[fig.14]FIG. 14 is a view showing an exemplary cross-sectional configuration of a display unit according to a third embodiment of the present technology.
[fig.15]FIG. 15 is a view showing an exemplary cross-sectional configuration of a display pixel in FIG. 14, along a plane parallel to the XZ plane.
[fig.16]FIG. 16 is a view showing an exemplary cross-sectional configuration of a display pixel in FIG. 15, as seen from a direction of an arrow A-A.
[fig.17]FIG. 17 is a view showing an exemplary cross-sectional configuration of the display pixel in FIG. 15, as seen from a direction of an arrow B-B.
[fig.18]FIG. 18 is a view showing an exemplary cross-sectional configuration of the display pixel in FIG. 15, as seen from the direction of the arrow B-B.
[fig.19]FIG. 19 is a view showing an exemplary behavior of a display layer in FIG. 14 when a magnetic field is input into the display layer.
[fig.20A]FIG. 20A is a view showing an exemplary behavior of the display layer in FIG. 14 when an electric field is input into the display layer.
[fig.20B]FIG. 20B is a view showing an exemplary behavior of the display layer in FIG. 14 when an electric field is input into the display layer.
[fig.20C]FIG. 20C is a view showing an exemplary behavior of the display layer in FIG. 14 when an electric field is input into the display layer.
[fig.21]FIG. 21 is a view showing a modified cross-sectional configuration of the display pixel in FIG. 15, as seen from the direction of the arrow A-A.
[fig.22]FIG. 22 is a view showing a modified cross-sectional configuration of the display pixel in FIG. 15, as seen from the direction of the arrow B-B.
[fig.23]FIG. 23 is a view showing a modified cross-sectional configuration of the display pixel in FIG. 15, as seen from the direction of the arrow B-B.
[fig.24]FIG. 24 is a view showing an exemplary cross-sectional configuration of a display unit according to a fourth embodiment of the present technology.
[fig.25]FIG. 25 is a view showing exemplary configurations of a sensor device and a drive section in FIG. 24.
[fig.26]FIG. 26 is a schematic view showing exemplary cross-sectional configurations of a display panel and the sensor device when a pen is brought into contact with the display surface of the display unit in FIG. 24.
[fig.27]FIG. 27 is a schematic view showing exemplary cross-sectional configurations of the display panel and the sensor device when the pen is pushed against the display surface of the display unit in FIG. 24.
[fig.28]FIG. 28 is a view showing modified configurations of the sensor device and the drive section in FIG. 24.

### Description of Embodiments

Embodiments and the like of the present technology will be described below in detail, with reference to the accompanying drawings. The description will be given in the following order.
1. First embodiment
   An example in which microcapsules are provided in a display layer
2. Second embodiment
   An example in which a spacer is provided in a display layer
3. Modification of second embodiment
   An example in which a spacer has a pillar shape
4. Third embodiment
   An example in which a fibrous structural body is provided in a display layer
5. Modification of third embodiment
   An example in which a spacer has a pillar shape
6. Fourth embodiment
   An example in which a sensor device is provided on a rear surface of a display panel

### (1. First Embodiment)

### (Configuration)

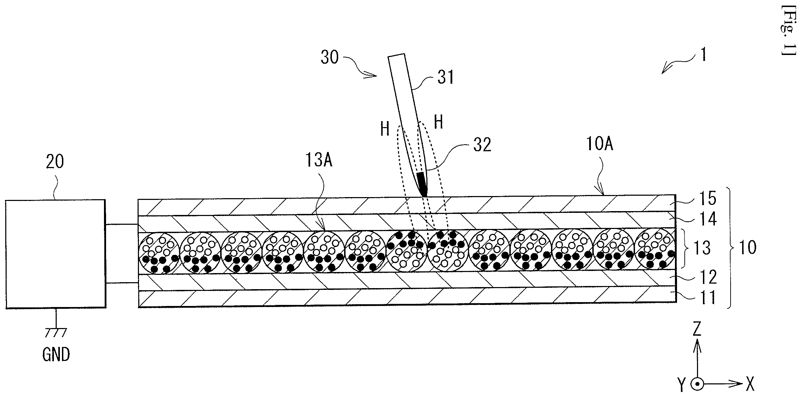

FIG. 1 shows an exemplary cross-sectional configuration of a display unit according to a first embodiment of the present technology. A display unit 1 includes, for example, a display panel 10, a drive section 20, and a pen 30. The display panel 10 changes its display, depending on a change in a magnetic or electric field. The drive section 20 applies a voltage to the display panel 10, changing the display of the display panel 10. The pen 30 applies a magnetic field to the display panel 10, changing the display of the display panel 10.

### (Pen 30)

The pen 30 is used to make drawings on a display surface 10A of the display panel 10, for example, by being brought into contact with or being pushed against the display surface 10A. The pen 30 has, for example, a bar-shaped grip 31 and a magnet 32 fixed to an end of the grip 31. The grip 31 is a part grabbed by his or her hand when a user uses the pen 30. The magnet 32 has a bar shape, and extends in a direction that is the same as the extending direction of the grip 31. The magnet 32 has N and S poles at the respective ends in its longitudinal direction. Accordingly, when the pen 30 is placed in an upright position on the display surface 10A of the display panel 10, the magnet 32 emits a magnetic field H (lines of magnetic force) that passes through a display layer 13, which will be described below, in its thickness direction (a Z axial direction in FIG. 1). For example, a magnetic flux density at the pen nib may be preferably about 50 G to 2000 G, and more preferably about 200 G to 1000 G. A member that prevents the lines of magnetic force from spreading out may be provided at the nib of the pen 30. For example, this member may be provided so as to cover the circumference of the pen nib (the whole side surface of a part of the magnet 32 at the pen nib. The member above that prevents the lines of magnetic force from spreading out may be made of, for example, a material having high relative permeability (e.g., permalloy, soft iron, etc.). Alternatively, this member may be provided so as to cover the overall side surface of the magnet 32. In this case, the member functions as a yoke, thereby being able to increase a magnetic flux density at the pen nib.

### (Display Panel 10)

Exemplary components of the display panel 10 may be a lower substrate 11, a lower electrode 12, the display layer 13, an upper electrode 14, and an upper substrate 15. Both the lower substrate 11 and the upper substrate 15 support the lower electrode 12, the display layer 13, and the upper electrode 14, and are arranged opposite and away from each other. The display layer 13 changes its display, depending on changes in magnetic and electric fields, and is disposed in a gap between the lower substrate 11 and the upper substrate 15. Both the upper electrode 14 and the lower electrode 12 are used to apply an electric field to the display layer 13, and arranged so as to face each other with the display layer 13 therebetween. The lower electrode 12 is disposed closer to the lower substrate 11; the upper electrode 14 is disposed closer to the upper substrate 15.

The lower substrate 11 may be made of, for example, an inorganic or plastic material. Examples of the inorganic material may include glass, quartz, silicon, and gallium arsenide. Examples of the plastic material may include polyimide, polyethylene terephthalate (PET), polyethylene naphthalate (PEN), polymethylmethacrylate (PMMA), polycarbonate (PC), and polyether sulfone (PES). The lower substrate 11 may be made of, for example, a material with high stiffness such as a wafer, or a flexible material such as a thin-layered glass or film. The upper substrate 15 may be made of, for example, one of the above exemplary materials for the lower substrate 11.

The lower electrode 12 may be made of, for example, a single metal element such as aluminum (Al), chromium (Cr), gold (Au), platinum (Pt), nickel (Ni), copper (Cu), tungsten (W), or silver (Ag). Alternatively, the lower electrode 12 may be made of, for example, an alloy (e.g., stainless steel (SUS)) containing one or more of the above exemplary metal elements. The lower electrode 12 may be made of, for example, a conductive material that transmits light (transparent electrode material). Examples of the transparent electrode material may include indium oxide-tin oxide (ITO), indium oxide-zinc oxide (IZO), antimony oxide-tin oxide (ATO), fluorine-doped tin oxide (FTO), and aluminum-doped zinc oxide (AZO). The lower electrode 12, for example, transmits light, and may be made of, for example, a nano-metal-wire, a carbon nanotube (CNT), or a narrow metal wire. The upper electrode 14 may be made of, for example, one of the above exemplary materials for the lower electrode 12.

Out of the lower substrate 11 and the upper substrate 15, at least the upper substrate 15 transmits light; out of the lower electrode 12 and the upper electrode 14, at least the upper electrode 14 transmits light. If all of the lower substrate 11, the lower electrode 12, the upper electrode 14, and the upper substrate 15 transmit light, it is also possible to use a surface (lower surface) of the display unit 1 which is closer to the lower substrate 11, as the display surface 10A, in addition to a surface (upper surface) of the display unit 1 which is closer to the upper substrate 15. Out of the lower electrode 12 and the lower substrate 11, at least the lower electrode 12 may absorb light, in which case a high contrast is obtained. Moreover, out of the lower electrode 12 and the lower substrate 11, at least the lower electrode 12 may be made of a material that reflects light, in which case a high luminance is obtained.

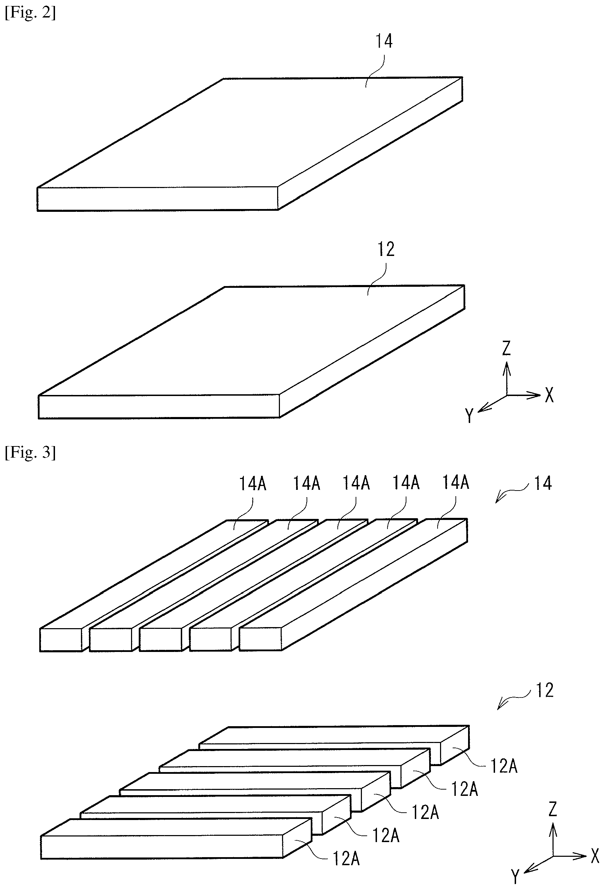

FIGs. 2, 3, and 4 show perspective exemplary configurations of the lower electrode 12 and the upper electrode 14. As shown in FIG. 2, for example, each of the lower electrode 12 and the upper electrode 14 is a sheet-shaped electrode that spans across a region facing the display surface 10A. In this case, for example, the drive section 20 applies a voltage between the lower electrode 12 and the upper electrode 14, changing (e.g., erasing) a display of the display layer 13 at one time.

As shown in FIG. 3, for example, the lower electrode 12 may include a plurality of partial electrodes 12A that extend in a first direction (an X direction in FIG. 3). In addition, as shown in FIG. 3, for example, the upper electrode 14 may include a plurality of partial electrodes 14A that extend in a second direction (a Y direction in FIG. 3) that intersects (e.g., is orthogonal to) the first direction. In this arrangement, for example, the drive section 20 drives the lower electrode 12 and the upper electrode 14 in a simple matrix driving manner, entirely or partially changing (e.g. erasing) the display of the display layer 13. In this case, a part of the display layer 13 which is interposed between the partial electrode 12A and the partial electrode 14A facing each other serves as pixels to be driven in the simple matrix driving manner. Each pixel to be driven in the simple matrix driving manner may be identical to a display pixel 13A that will be described below, or may correspond to the plurality of display pixels 13A.

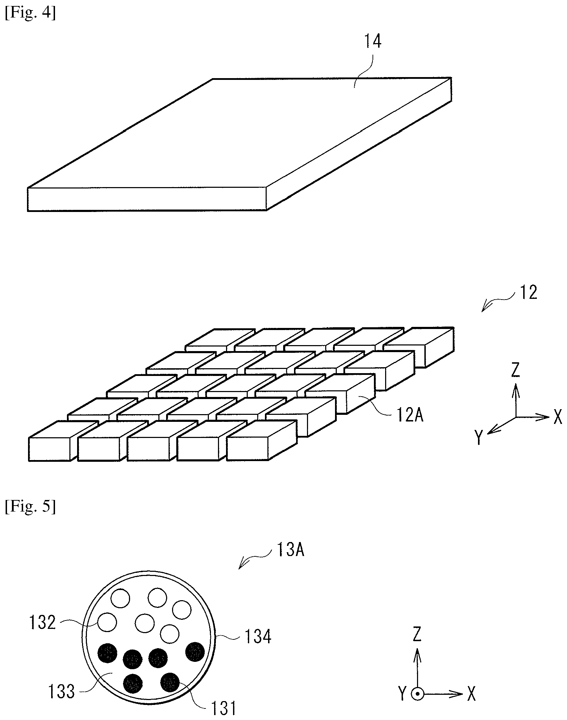

As shown in FIG. 4, for example, the lower electrode 12 may include a plurality of partial electrodes 12A arranged two-dimensionally within a plane. In addition, as shown in FIG. 4, for example, the upper electrode 14 may be a sheet-shaped electrode that spans across a region facing the display surface 10A. In this arrangement, for example, the drive section 20 drives the plurality of partial electrodes 12A in an active matrix driving manner, entirely or partially changing (e.g., erasing) the display of the display layer 13. In this case, parts of the display layer 13 which face the corresponding partial electrodes 12A serve as pixels to be driven in the active matrix driving manner. One of the pixels to be driven in the active matrix driving manner may be allocated to a corresponding one of the display pixels 13A that will be described below, or the plurality of the display pixels 13A. Alternatively, the plurality of pixels to be driven in the active matrix driving manner may be allocated to one of the display pixels 13A.

FIG. 5 shows an exemplary cross-sectional configuration of the display pixel 13A, which is a minimum unit in the display layer 13. The plurality of display pixels 13A are contained in the display layer 13, and are arranged two-dimensionally in a region facing the display surface 10A. Each display pixel 13A has a dispersion medium 133, and a plurality of first elements 131 and a plurality of second elements 132 provided in the dispersion medium 133. The display pixel 13A further has a microcapsule 134 that encapsulates the dispersion medium 133 and the plurality of first elements 131 and the plurality of second elements 132.

Each first element 131 is a magnetic body. Examples of the magnetic body may include triiron tetraoxide, diiron trioxide, and various types of ferrites. The magnetic body may be made of, for example, a metal, including iron, manganese, nickel, cobalt, and chromium, or an alloy containing cobalt, nickel, manganese, and the like. When the first element 131 is made of one of the above exemplary materials, it serves as a particle with a color intended for a dark-colored display (specifically, a black or any similar color). The first element 131 is a particle that has a property of a magnetic body (i.e., a magnetic particle). This magnetic particle may have a particle diameter of, for example, about 0.1 micrometers to 20 micrometers. For example, the first element 131 may contain a magnetic body (i.e., magnetic particle). Alternatively, for example, the first element 131 may be a mixture of a magnetic particle and a resin.

Each second element 132 is a nonmagnetic body. The nonmagnetic body may be, for example, a metal oxide, including titanium oxide, zinc oxide, zirconium oxide, barium titanate, and potassium titanate. The nonmagnetic body may be, for example, an inorganic salt, including barium sulfate and calcium carbonate, or an organic compound, including polyvinylpyrrolidine. When the second element 132 is made of one of the above exemplary materials, it serves as a particle with a color intended for a light-colored display (specifically, a white or any similar color). The second element 132 is a particle that has a property of a nonmagnetic body (i.e., a nonmagnetic particle). This nonmagnetic particle may have a particle diameter of, for example, about 0.1 micrometers to 1 micrometer. The second element 132 may contain, for example, a nonmagnetic body (i.e., a nonmagnetic particle). Alternatively, the second element 132 may contain, for example, a nonmagnetic particle and a resin.

In the present invention, both the first element 131 and the second element 132 are charged. More specifically, both the magnetic or nonmagnetic particles are electrically modified. A description will be given below of an exemplary method of manufacturing electrically modified magnetic particles. It is to be noted that electrically modified non-magnetic particles may also be manufactured through the same method as that to be described below.

A solution A was obtained by dissolving about 42.624 g of sodium hydroxide and about 0.369 g of sodium silicate in about 43 g of water. Next, about 5g of black-colored magnetic particles (triiron tetraoxide) were added to the solution A while the solution A was being agitated. Followed by, the resultant solution A was agitated in about 15 minutes, and then was subjected to ultrasonic agitation (at about 30 degrees C to 35 degrees C in about 15 minutes). After that, the solution A was heated (to about 90 degrees C), and then about 15 cm³ (= ml) of sulfuric acid with a concentration of about 0.22 mol/cm³ and an about 7.5 cm³ of aqueous solution in which about 6.5 mg of sodium silicate and about 1.3 mg of sodium hydroxide were dissolved were dropped into the solution A in about 2 hours. Then, the resultant solution A was cooled (to ambient temperature), after which about 1.8 cm³ of sulfuric acid with a concentration of about 1 mol/cm³ was added to the solution A. Subsequently, the solution A was subjected to centrifugal separation (at about 3700 rpm in about 30 minutes), and then to decantation. Next, the resultant solution A was re-dissipated in ethanol, and then was alternately subjected to centrifugal separation (at about 3700 rpm in about 30 minutes) and decantation twice. Followed by, a liquid mixture of about 5 cm³ of ethanol and about 0.5 cm³ of water was added to the solution A, and then was ultrasonically agitated (in about 1 hour), so that a solution in which black-colored, silane coating magnetic particles were dispersed was obtained.

Next, about 3 cm³ of water, about 30 cm³ of ethanol, and about 4 g of N-[3-(trimethoxysilyl)propyl]-N'-(4-vinylbenzyl) ethylenediamine hydrochloride (about 40% of methanol solution) were mixed and agitated (in about 7 minutes). Then, the entire dispersed solution described above was put in the resultant mixture solution. Followed by, the mixture solution was agitated (in about 10 minutes), and then was subjected to centrifugal separation (at about 3500 rpm in about 30 minutes). Subsequently, the mixture solution was subjected to decantation. After that, a washing operation in which the mixture solution was re-dispersed in ethanol and was subjected to centrifugal separation (at about 3500 rpm in about 30 minutes) was repeatedly performed twice. The resultant mixture solution was subjected to decantation, and then was dried in a reduced-pressure environment (at ambient temperature in about 6 hours), and was further dried in a reduced-pressure environment (at about 70 degrees C in about 2 hours). As a result, a solid matter was obtained.

Next, about 50 cm³ of toluene was added to the solid matter above, so that a solution B was obtained and agitated with a roll mill (in about 12 hours). The resultant solution B was transferred to a three-neck flask, then about 1.7 g of acrylic acid 2-ethylhexyl ester was put into the three-neck flask, and was agitated in the current of nitrogen gas (in about 20 minutes). Then, the solution B was agitated (at about 50 degrees C in about 20 minutes), after which a solution C obtained by dissolving about 0.01 g of AIBN in about 3 cm³ of toluene was added to the solution B and then heated (to about 65 degrees C). Followed by, the solution B was agitated (in about 1 hour), and then cooled to ambient temperature. Then, the solution B was made to flow into a bottle together with acetic ether, and subjected to centrifugal separation (at about 3500 rpm in about 30 minutes). Subsequently, the resultant solution in the bottle was subjected to decantation. Then, a washing operation in which the content in the bottle was re-dispersed in acetic ether, and subjected to centrifugal separation (at about 3500 rpm in about 30 minutes) was repeatedly performed three times. Followed by, the resultant content was dried in a reduced-pressure environment (at ambient temperature in about 12 hours), and was further dried in a reduced-pressure environment (at 70 degrees C in about 2 hours). As a result, black-colored electrophoretic particles made of black-colored magnetic particles were obtained.

Each microcapsule 134 may be made of, for example, a composite membrane of gum Arabic and gelatin, an urethane resin, an urea resin, or the like. The dispersion medium 133 may be made of, for example, water, alcohols, esters, ketones, aliphatic straight-chain hydrocarbon, alicyclic hydrocarbon, aromatic hydrocarbon, halogenated hydrocarbon, carboxylate, or the like. A surface-active agent may be added to the dispersion medium 133.

### (Behavior)

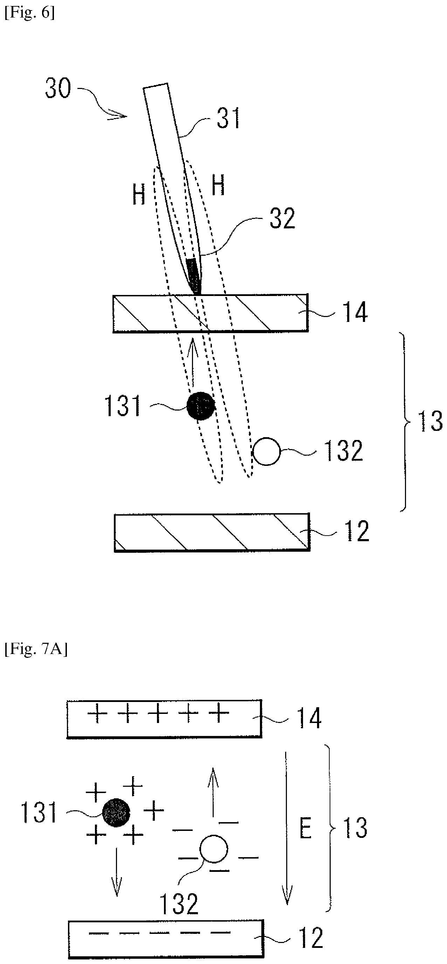

FIG. 6 shows an exemplary behavior of the display layer 13 when a magnetic field H is input into the display layer 13. The first elements 131 are magnetic bodies; the second elements 132 are nonmagnetic bodies, as described above. Accordingly, a magnetic field H input from the pen 30 exerts a magnetic force on the first elements 131 in a direction from the lower electrode 12 to the upper electrode 14. As a result, the first elements 131 are displaced toward the upper electrode 14 (or the upper substrate 15), and are brought into contact with or are positioned close to the upper electrode 14. The second elements 132 are not displaced particularly due to the magnetic field H input from the pen 30. However, the second elements 132 are pushed toward the lower electrode 12 (or the lower substrate 11) because of the gathering of the first elements 131 close to the upper electrode 14. Thus, when the pen 30 makes contact with the display surface 10A, the part of the display surface 10A with which the pen 30 has made contact shows a dark-colored display (e.g., black display).

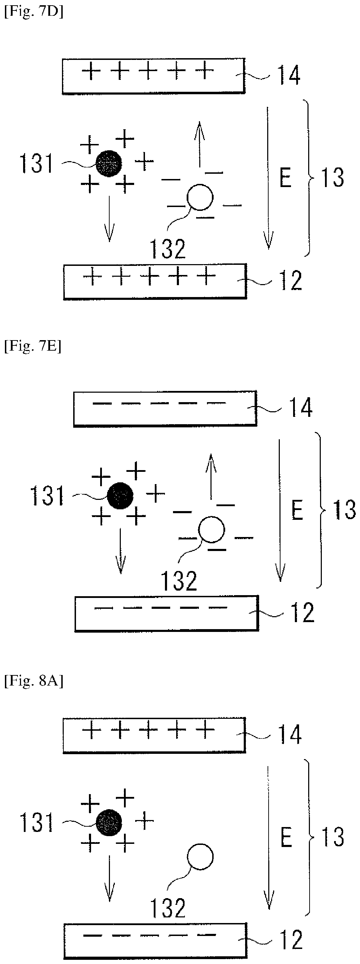

FIGs. 7A, 7B, 7C, 8A, 8B, 8C, 9A, 9B, and 9C show exemplary behaviors of the display layer 13 when an electric field E is input into the display layer 13. FIGs. 7A to 7C show exemplary behaviors of the display layer 13 in the case where the first elements 131 and the second elements 132 are charged positively and negatively, respectively. FIGs. 8A to 8C show exemplary behaviors of the display layer 13 in the case where the first elements 131 are charged positively but the second elements 132 are not charged. FIGs. 8A to 8C show exemplary behaviors of the display layer 13 in the case where the first elements 131 are not charged but the second elements 132 are charged negatively.

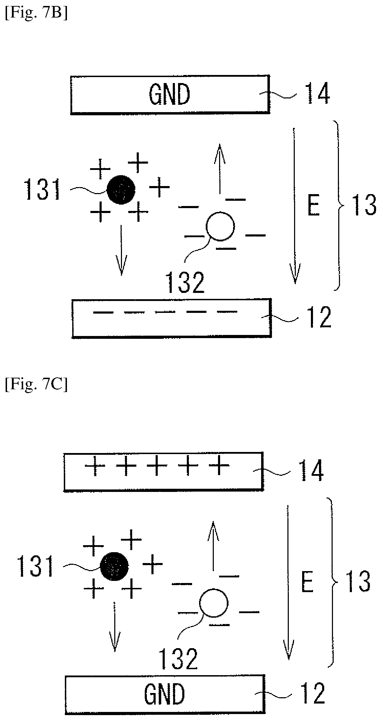

In the case where the first elements 131 and the second elements 132 are charged positively and negatively, respectively, the drive section 20 applies a voltage between the upper electrode 14 and the lower electrode 12, such that the potential of the upper electrode 14 becomes higher than that of the lower electrode 12. To give an example, as shown in FIG. 7A or 7C, the drive section 20 may apply a positive voltage to the upper electrode 14, and a negative voltage or ground voltage (0 V) to the lower electrode 12. To give another example, as shown in FIG. 7B, the drive section 20 may apply a ground voltage (0 V) to the upper electrode 14, and a negative voltage to the lower electrode 12. To give sill another example, as shown in FIG. 7D, the drive section 20 may apply a positive voltage to the upper electrode 14, and a lower positive voltage than that applied to the upper electrode 14 to the lower electrode 12. To give further another example, as shown in FIG. 7E, the drive section 20 may apply a negative voltage to the upper electrode 14, and a lower negative voltage than that applied to the upper electrode 14 to the lower electrode 12. In this way, an electric field E directed from the upper electrode 14 to the lower electrode 12 is generated in the display layer 13. In response, the electric field E input from both the lower electrode 12 and the upper electrode 14 exerts Coulomb forces on the first elements 131 and the second elements 132 in directions from the upper electrode 14 to the lower electrode 12 and from the lower electrode 12 to the upper electrode 14, respectively. As a result, the first elements 131 are displaced toward the lower electrode 12 (or the lower substrate 11) and therefore make contact with or are positioned close to the lower electrode 12. In addition, the second elements 132 are displaced toward the upper electrode 14 (or the upper substrate 151), and make contact with or are positioned close to the upper electrode 14. Thus, when the voltage described above is applied between the upper electrode 14 and the lower electrode 12, the display layer 13 shows light-colored displays (e.g., white displays) in the individual pixels to be driven in the matrix driving manner.

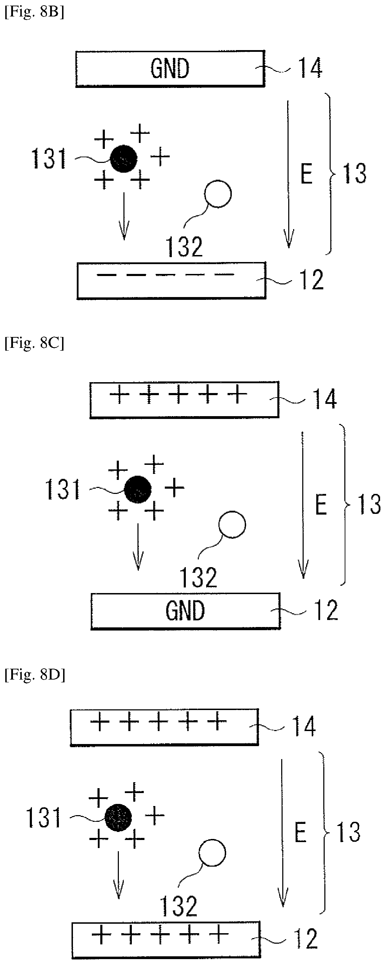

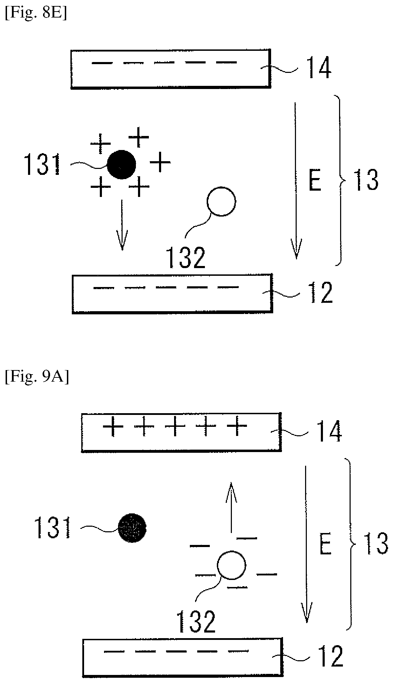

In the case where the first elements 131 are positively charged but the second elements 132 are not charged, the drive section 20 also applies a voltage between the upper electrode 14 and the lower electrode 12 such that the potential of the upper electrode 14 becomes higher than that of the lower electrode 12. To give an example, as shown in FIG. 8A or 8C, the drive section 20 may apply a positive voltage to the upper electrode 14, and a negative voltage or a ground voltage (0 V) to the lower electrode 12. To give another example, as shown in FIG. 8B, the drive section 20 may apply a ground voltage (0 V) to the upper electrode 14, and a negative voltage (0 V) to the lower electrode 12. To give still another example, as shown in FIG. 8D, the drive section 20 may apply a positive voltage to the upper electrode 14, and a lower positive voltage than that applied to the electrode 14 to the lower electrode 12. To give further another example, as shown in FIG. 8E, the drive section 20 may apply a negative voltage to the upper electrode 14, and a lower negative voltage than that applied to the electrode 14 to the lower electrode 12. In this way, an electric field E directed from the upper electrode 14 to the lower electrode 12 is generated in the display layer 13. In response, the electric field E input from both the lower electrode 12 and the upper electrode 14 exerts on the first elements 131 in a direction from the upper electrode 14 to the lower electrode 12. In contrast, the second elements 132 are not displaced particularly due to the electric field E input from both the lower electrode 12 and the upper electrode 14. However, the second elements 132 are pushed toward the upper electrode 14 because of the gathering of the first elements 131 close to the lower electrode 12. Thus, when the voltage described above is applied between the upper electrode 14 and the lower electrode 12, the display layer 13 shows light-colored displays (e.g., white displays) in the individual pixels to be driven in the matrix driving manner.

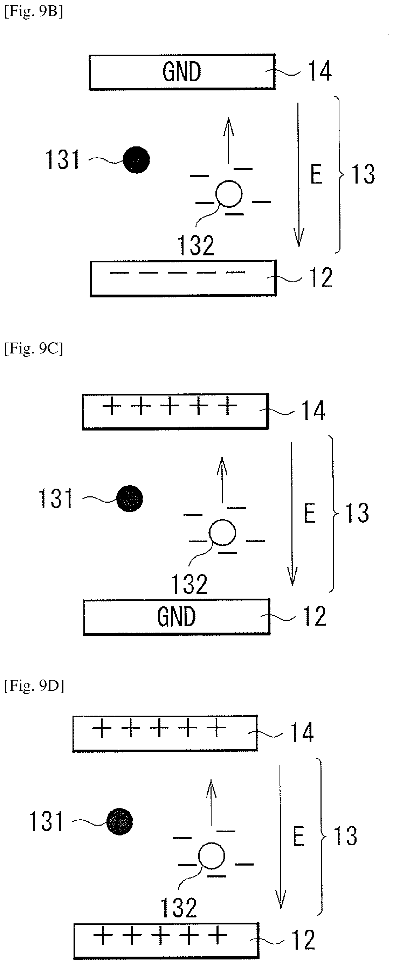

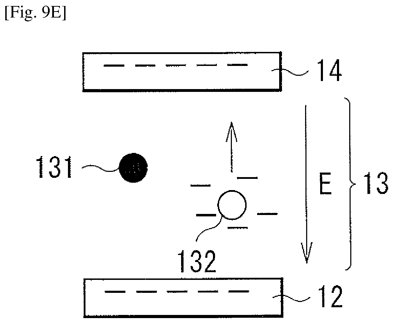

In the case where the first elements 131 are not charged but the second elements 132 are negatively charged, the drive section 20 also applies a voltage between the upper electrode 14 and the lower electrode 12 such that the potential of the upper electrode 14 becomes higher than that of the lower electrode 12. To give an example, as shown in FIG. 9A or 9C, the drive section 20 may apply a positive voltage to the upper electrode 14, and a negative voltage or a ground voltage (0 V) to the lower electrode 12. To give another example, as shown in FIG. 9B, the drive section 20 may apply a ground voltage (0 V) to the upper electrode 14, and a negative voltage (0 V) to the lower electrode 12. To give still another example, as shown in FIG. 9D, the drive section 20 may apply a positive voltage to the upper electrode 14, and a lower positive voltage than that applied to the electrode 14 to the lower electrode 12. To give further another example, as shown in FIG. 9E, the drive section 20 may apply a negative voltage to the upper electrode 14, and a lower negative voltage than that applied to the electrode 14 to the lower electrode 12. In this way, an electric field E directed from the upper electrode 14 to the lower electrode 12 is generated in the display layer 13. In response, the electric field E input from both the lower electrode 12 and the upper electrode 14 exerts a Coulomb force on the second elements 132 in a direction from the upper electrode 14 to the lower electrode 12. The first elements 131 are not displaced especially due to the electric field E input from both the lower electrode 12 and the upper electrode 14. However, the first elements 131 are pushed toward the lower electrode 12 because of the gathering of the second elements 132 close to the upper electrode 14. Thus, when the voltage described above is applied between the upper electrode 14 and the lower electrode 12, the display layer 13 shows light-colored displays (e.g., white displays) in the individual pixels to be driven in the matrix driving manner.

To sum up the above, the display layer 13 is able to change its displays (make drawings) in the individual microcapsules 134 (individual display pixels 13A), by virtue of the displacement of the first elements 131 which is caused by the magnetic field H input from the pen 30. Furthermore, the display layer 13 is also able to change (erase) a display of the overall display surface 10A or displays in the individual pixels to be driven in the matrix driving manner, by virtue of the displacement of charged ones of the first elements 131 and the second elements 132 which is caused by the electric field E input from both the lower electrode 12 and the upper electrode 14.

In erasing the display, it is possible to increase the displacement speeds of the first elements 131 and the second elements 132 (erasing speed) by applying positive and negative voltages to the upper electrode 14 and the lower electrode 12, respectively. However, there are cases where it is necessary for one of the upper electrode 14 and the lower electrode 12 to be grounded (at 0 V) due to some restrictions. In such a case, however, it is possible to erase the display by charging one or both of each first element 131 and each second element 132, as shown in FIGs. 7B, 7C, 8B, 8C, 9B, and 9C. Moreover, there are cases where charging both of each first element 131 and each second element 132 is difficult due to some restrictions. Even in this case, it is possible to erase the display by applying a voltage between the upper electrode 14 and the lower electrode 12 such that the potential of the upper electrode 14 becomes higher than that of the lower electrode 12.

If one or both of the upper electrode 14 and the lower electrode 12 are configured with the plurality of partial electrodes (12A and 14A), a part of the display layer 13 which is interposed between the upper electrode 14 and the lower electrode 12 facing each other serves as the pixels to be driven in the matrix driving manner. Therefore, the drive section 20 enables the potential difference between the upper electrode 14 and the lower electrode 12 to be greater than a threshold potential difference at which the display of the display layer 13 starts changing from the dark-colored display to the light-colored display, simply by using predetermined ones of the pixels to be driven in the matrix driving manner. In this way, it is possible to partially erase the display by increasing a corresponding part of the electric field E.

For example, suppose a user inputs an instruction of clearing a predetermined region on the display surface 10A into the display unit 1. In response to the erasing instruction, the drive section 20 performs a clear operation for ones of the pixels to be driven in the matrix driving manner which correspond to the predetermined region. In more detail, the drive section 20 makes the voltage difference between the upper electrode 14 and the lower electrode 12 greater than the threshold voltage difference described above, simply using ones of the pixels to be driven in the matrix driving manner which correspond to the predetermined region. Partially increasing the electric field E in this manner makes it possible to clear only a predetermined region on the display surface 10A.

If the upper substrate 15 and the upper electrode 14 are each made of a material having low stiffness and the drive section 20 applies a lower voltage difference than the above threshold, between the upper electrode 14 and the lower electrode 12, the following partial clear is possible. More specifically, a user pushes a nonmagnetic bar (e.g., the end of the pen 30 opposite the nib) or the like against a part of the display surface 10A which he or she wants to clear. In response to this, the thickness of the display layer 13 is partially decreased, and therefore the intensity of the electric field E partially exceeds the above threshold. Partially increasing the electric field E in this manner also makes it possible to clear only a predetermined region on the display surface 10A.

### (Effect)

Next, effects of the display unit 1 will be described. The display unit 1 changes a display of the display layer 13, by virtue of the electric field E input from both the upper electrode 14 and the lower electrode 12. It is therefore possible to utilize the electric field E input from both the upper electrode 14 and the lower electrode 12, when clearing the display on the display layer 13. For example, entirely inputting the electric field E into the display layer 13 makes it possible to clear the overall display surface 10A at one time. In addition, because the electric field E is utilized to clear the display surface 10A, it is possible to reduce a risk that drawings may be left unerased, compared with utilizing a magnetic field to clear the display surface 10A.

The display unit 1 changes a display of the display layer 13, by virtue of the magnetic field H input from the pen 30. It is therefore possible to utilize the magnetic field H input from the pen 30 in order to make drawings on the display surface 10A. Inputting the magnetic field H from the pen 30 makes it possible to increase the speed of a response to make drawings on the display surface 10A. Thus, if the display unit 1 utilizes the magnetic field H to make drawings and the electric field E to clear the display surface 10A, it is possible to provide a display unit that enables drawings to be made at a fast speed and to be entirely erased at one time, and that reduces a risk that the drawings may be left unerased.

If one of both of the upper electrode 14 and the lower electrode 12 in the display unit 1 are configured with the plurality of partial electrodes (12A and 14A), a part of the display layer 13 which is interposed between the upper electrode 14 and the lower electrode 12 facing each other serves as the pixels to be driven in the matrix driving manner. Accordingly, by setting the potential difference between the upper electrode 14 and the lower electrode 12 for predetermined ones of the pixels to be driven in the matrix driving manner greater than the threshold potential difference, it is possible to clear only a predetermined region on the display surface 10A. Furthermore, by setting the potential difference between the upper electrode 14 and the lower electrode 12 for all the pixels to be driven in the matrix driving manner greater than the threshold potential difference, it is possible to clear the overall display surface 10A. Thus, by configuring one or both of the upper electrode 14 and the lower electrode 12 in the display unit 1 with the plurality of partial electrodes (12A and 14A), it is possible to partially clear the display surface 10A or clear the overall display surface 10A at one time. In this case, it is accordingly possible to provide a display unit that enables drawings to be made at a fast speed and to be erased entirely at one time or partially, and that reduces a risk that the drawings may be left unerased.

### (2. Second Embodiment)

### (Configuration)

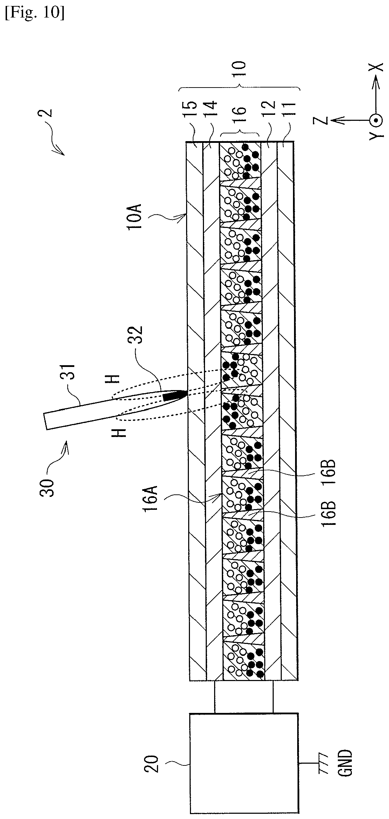

FIG. 10 shows an exemplary cross-sectional configuration of a display unit 2 according to a second embodiment of the present technology. The display unit 2 is substantially identical to the display unit 1, described above, in the first embodiment, except that a display layer 16 is provided instead of the display layer 13. Accordingly, a detailed description of the display layer 16 will be mainly given below, and descriptions of configurations which are substantially the same as those of the display unit 1, described above, in the first embodiment will be skipped as appropriate.

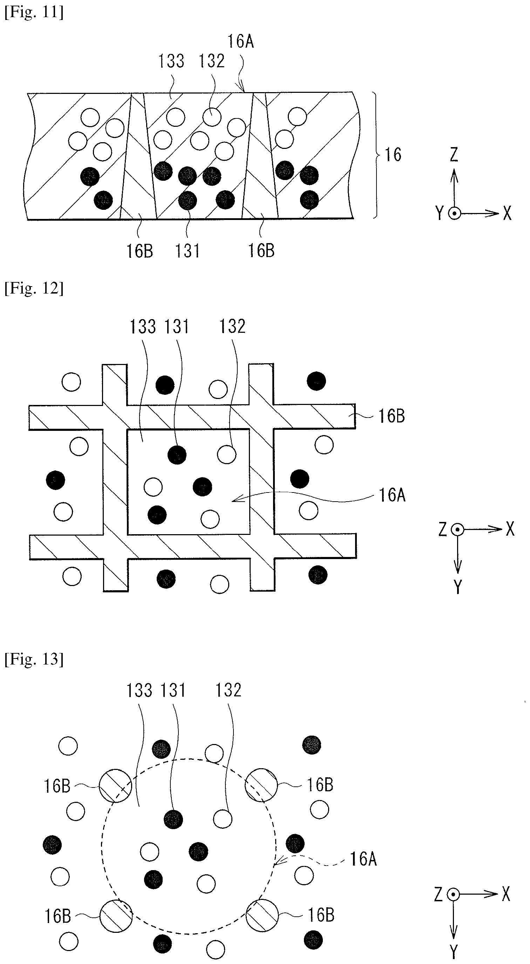

FIG. 11 shows an exemplary cross-sectional configuration of a display pixel 16A along a plane parallel to an XZ plane, the display pixel 16A being a minimum unit of the display layer 16. FIG. 12 shows an exemplary cross-sectional configuration of the display pixel 16A along a plane parallel to an XY plane. In the display layer 16, the plurality of display pixels 16A are arranged two-dimensionally in a region facing the display surface 10A. Components in each display pixel 16A may be the dispersion medium 133 and the plurality of first elements 131 and second elements 132 provided in the dispersion medium 133. Furthermore, the display pixels 16A are provided with a spacer 16B that spatially separates the dispersion medium 133 into a plurality of regions.

The spacer 16B restricts the gap between the pair of substrates (the lower substrate 11 and the upper substrate 15). As shown in FIG. 12, for example, the spacer 16B may have a lattice shape, and spatially separate the dispersion medium 133 into a plurality of square regions. Alternatively, the spacer 16B may spatially separate the dispersion medium 133 into, for example, a plurality of hexagonal or circular regions. The spacer 16B may be made of, for example, an insulating material. The spacer 16B may be formed, for example, by printing a resin material in a square, hexagonal, or circular lattice shape with screen printing, and then curing this resin material with UV light or on heating.

### (Behavior)

Behaviors of the display layer 16 in the second embodiment are substantially the same as those of the display layer 13, described above, in the first embodiment. The display layer 16 is able to change its display (make drawings) by virtue of the displacement of the first elements 131 which is caused by a magnetic field H input from the pen 30. In this case, the first elements 131 and the second elements 132 move in each of the display pixels 16A partitioned by the spacer 16B. This makes it possible to reduce a variation in the reflection factor of the display surface 10A. Moreover, in the display layer 16, a charged one of each first element 131 and each second element 132 is displaced due to an electric field E input from both the lower electrode 12 and the upper electrode 14. This makes it possible to change (erase) the display while reducing a variation in the reflection factor of the display surface 10A.

### (Effect)

Next, a description will be given of effects of the display unit 2 in the second embodiment. The display unit 2 changes a display of the display layer 16 by virtue of the electric field E input from both the upper electrode 14 and the lower electrode 12. It is thus possible to utilize the electric field E input from both the upper electrode 14 and the lower electrode 12 when erasing the display of the display layer 16. For example, it is possible to clear the overall display surface 10A at one time by inputting the electric field E into the overall display layer 16. In addition, since the electric field E is utilized to clear the display surface 10A, it is possible to reduce a risk that drawings may be left unerased, compared with utilizing a magnetic field to clear the surface.

The display unit 2 changes a display of the display layer 16, by virtue of the magnetic field H input from the pen 30. It is therefore possible to utilize the magnetic field H input from the pen 30 in order to make drawings on the display surface 10A. Inputting the magnetic field H from the pen 30 makes it possible to increase the speed of a response to make drawings on the display surface 10A. Thus, if the display unit 2 utilizes the magnetic field H to make drawings and the electric field E to clear the display surface 10A, it is possible to provide a display unit that enables drawings to be made at a fast speed and to be entirely erased at one time, and that reduces a risk that the drawings may be left unerased.

If one of both of the upper electrode 14 and the lower electrode 12 in the display unit 2 are configured with the plurality of partial electrodes (12A and 14A), a part of the display layer 16 which is interposed between the upper electrode 14 and the lower electrode 12 facing each other serves as pixels to be driven in the matrix driving manner. Accordingly, by setting the potential difference between the upper electrode 14 and the lower electrode 12 for predetermined ones of the pixels to be driven in the matrix driving manner greater than the threshold potential difference above, it is possible to clear only a predetermined region on the display surface 10A. Furthermore, by setting the potential difference between the upper electrode 14 and the lower electrode 12 for all the pixels to be driven in the matrix driving manner greater than the threshold potential difference, it is possible to clear the overall display surface 10A. Thus, by configuring one or both of the upper electrode 14 and the lower electrode 12 in the display unit 2 with the plurality of partial electrodes (12A and 14A), it is possible to partially clear the display surface 10A or clear the overall display surface 10A at one time. In this case, it is accordingly possible to provide a display unit that enables drawings to be made at a fast speed and to be erased entirely at one time or partially, and that reduces a risk that the drawings may be left unerased.

If the upper substrate 15 and the upper electrode 14 are each made of a material having low stiffness and the drive section 20 applies a lower voltage difference than the above threshold, between the upper electrode 14 and the lower electrode 12, the following partial clear is possible. More specifically, a user pushes a nonmagnetic bar (e.g., the end of the pen 30 opposite the nib) or the like against a part of the display surface 10A which he or she wants to clear. In response to this, the thickness of the display layer 16 is partially decreased, and therefore the intensity of the electric field E partially exceeds the above threshold. Thus, partially increasing the electric field E in this manner also makes it possible clear only a predetermined region on the display surface 10A.

### (3. Modification of Second Embodiment)

In the second embodiment described above, the spacer 16B may have a pillar shape, for example, as shown in FIG. 13. In this case, the spacer 16B does not spatially separate the dispersion medium 133 into a plurality of regions, and plays only a limited role of restricting the gap between the pair of substrates (the lower substrate 11 and the upper substrate 15). This configuration enables an occupied proportion of the spacer 16B in the display layer 16 to be decreased, making the display unit 2 more flexible.

### (4. Third Embodiment)

### (Configuration)

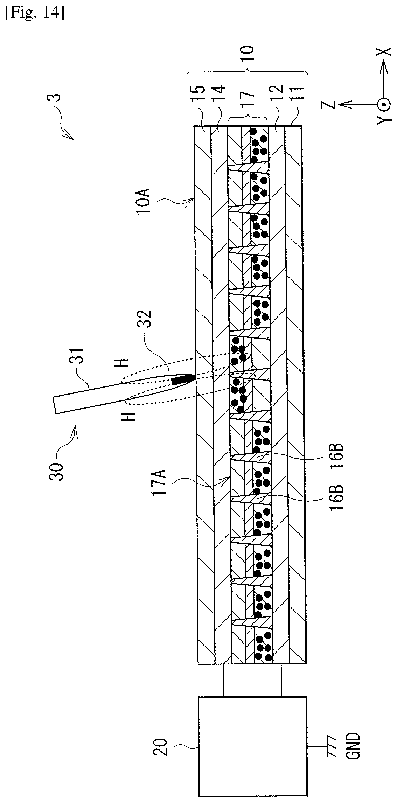

FIG. 14 shows an exemplary cross-sectional configuration of a display unit 3 according to a third embodiment of the present technology. The display unit 3 is substantially identical to the display unit 2, described above, in the second embodiment, except that a display layer 17 is provided instead of the display layer 16. Accordingly, a detailed description of the display layer 17 will be mainly given below, and descriptions of configurations which are substantially the same as those of the display unit 2, described above, in the second embodiment will be skipped as appropriate.

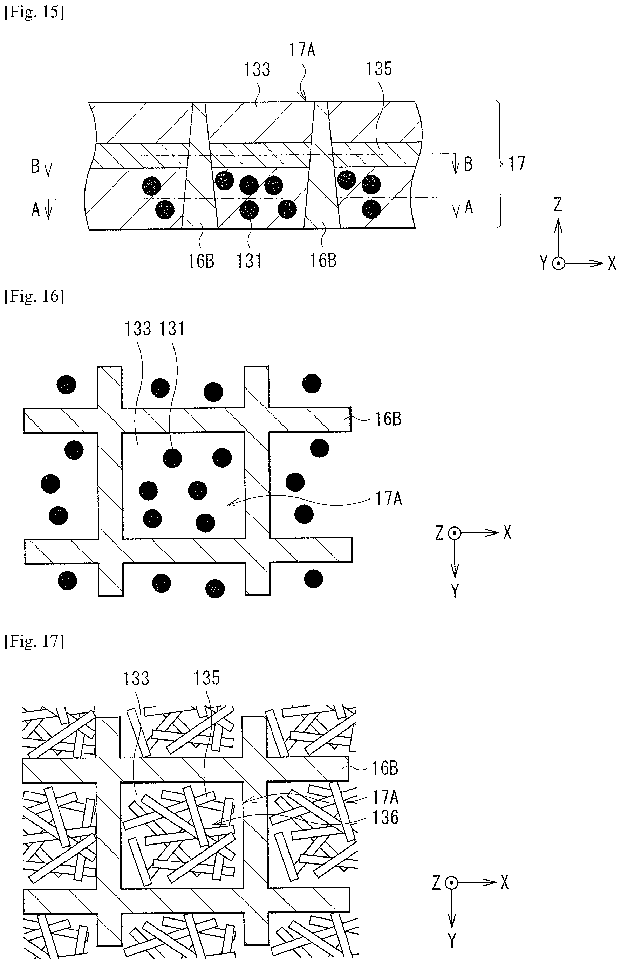

FIG. 15 shows an exemplary cross-sectional configuration of a display pixel 17A along a plane parallel to an XZ plane, the display pixel 17A being a minimum unit of the display layer 17. FIG. 16 shows an exemplary cross-sectional configuration of the display pixel 17A in parallel of an XY plane and as seen from a direction of an arrow A-A. FIG. 17 shows an exemplary cross-sectional configuration of the display pixel 17A in parallel to the XY plane and as seen from a direction of an arrow B-B.

In the display layer 17, a plurality of display pixels 17A are arranged two-dimensionally in a region facing the display surface 10A. Components of each display pixel 17A may be the dispersion medium 133, the plurality of first elements 131, and a fibrous structural body 135 which are provided in the dispersion medium 133. Furthermore, in the display pixel 17A, the spacer 16B restricts the gap between the pair of substrates (the lower substrate 11 and the upper substrate 15), and spatially separates the dispersion medium 133 into a plurality of regions. The fibrous structural body 135 constitutes a porous layer, and may be made of, for example, a fibrous material with its length being much larger than its fibrous diameter (diameter). The fibrous structural body 135 is positioned away from both the lower electrode 12 and the upper electrode 14 (namely, in the gap between the lower electrode 12 and the upper electrode 14 and at a midway point therebetween).

The fibrous structural body 135 has the same polarity as the first elements 131. More specifically, the surface of the fibrous structural body 135 is modified by a functional group that has the same polarity as the first elements 131. The display layer 17 makes contrast based on a difference in optical reflection property (referred to below as simply "reflection property") between each first element 131 and the fibrous structural body 135. Specifically, when an electric field E is applied to the first elements 131 in the display layer 17, the first elements 131 in a region to which the electric field E has applied move via fine pores 136 in the fibrous structural body 135. In this way, the display layer 17 switches between light-colored and dark-colored displays.

Each first element 131 is charged. More specifically, a magnetic particle configuring each first element 131 is electrically modified. Each first element 131 is a charged particle with a polarity. Although details thereof will be described below, a functional group with the property of an acceptor or donor is bonded to the surface of each first element 131. If the fibrous structural body 135 has an opposite polarity to that of the first elements 131, the first elements 131 may be attracted to the fine pores 136 or their movements may be inhibited when the first elements 131 pass through the fine pores 136, thereby possibly lowering the display characteristics. In the third embodiment, however, functional groups with the same polarity as the first elements 131 are bonded to the surface of the fibrous structural body 135. As a result, the first elements 131 are prevented from being attracted to the fine pores 136.

The surface of the fibrous structural body 135 is bonded to, for example, silicon (Si) atoms, titanium atoms, and aluminum atoms, or siloxanes (-Si-O-), titanates (-Ti-O-), and aluminates (-Al-O-), in addition to amine functional groups. Each amine functional group represents an amino group, an imino group, or an amido group. There is no specific limitation on the surface of the fibrous structural body 135, but it may have the same polarity as the first elements 131. In addition, there is no limitation on the type of the bond between the fibrous structural body 135 and each functional group above; however the covalent bond may be preferred. Since the first elements 131 move in the fine pores 136 in the fibrous structural body 135 as described above, the first elements 131 and the fibrous structural body 135 are considered to be brought into contact with each other. Accordingly, if the bonding force is weak between the fibrous structural body 135 and the functional groups above, the functional groups may lose the bond with the fibrous structural body 135.

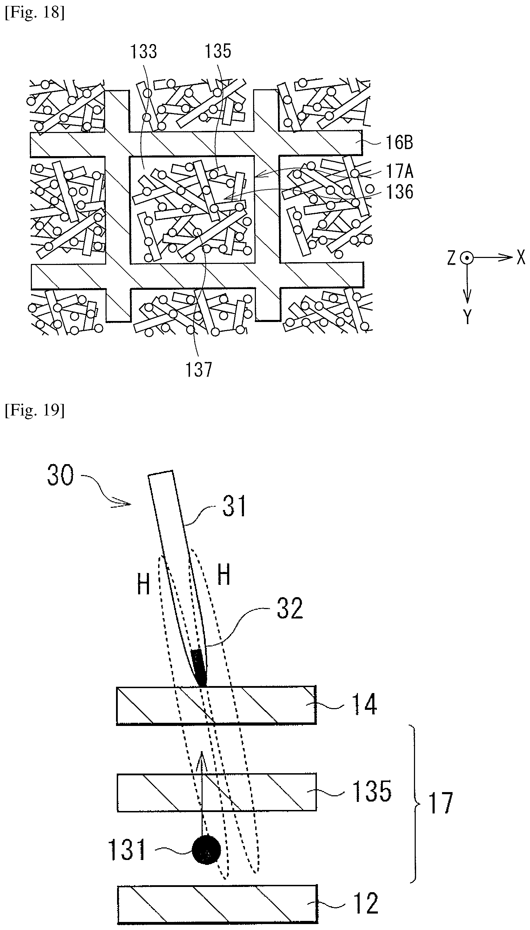

Although there is no specific limitation, a method of modifying the fibrous structural body 135, or a method of treating the surface of the fibrous structural body 135, may preferably be performed under temperate condition. For example, a gas-phase reaction method using a silane coupling agent may preferably be performed. A reason is that the gaps (fine pores 136) formed in the fibrous structural body 135 and the structure of the fibrous structural body 135 are important for the movement of the first elements 131, and it is therefore necessary to modify the fibrous structural body 135 without changing its structure. The fibrous structural body 135 forms the plurality of fine pores 136. As shown in FIG. 18, for example, the fibrous structural body 135 may include a plurality of third elements 137. In this case, the plurality of third elements 137 are held by the fibrous structural body 135.

The fibrous structural body 135 may be configured with a single randomly twisted fiber, a plurality of fibers randomly entwined, or a combination thereof. If the plurality of fibrous structural bodies 135 are provided in the display layer 17, each fibrous structural body 135 holds the one or more third elements 137.

The fibrous structural body 135 has a 3D structure. A reason is that this structure diffusely reflects (multiple-scatters) light (external light), increasing the reflection factor of the fibrous structural body 135 and enabling this increased reflection factor to be obtained with the small thickness of the fibrous structural body 135. It is thus possible to increase the contrast of the display layer 17, and to decrease energy necessary to move the first elements 131. Moreover, this structure increases the number and average diameter of fine pores 136, thereby facilitating the movement of the first elements 131 via the fine pores 136. Consequently, the response speed of the first elements 131 is increased, and energy necessary to move the first elements 131 is decreased.

The reason why the plurality of third elements 137 are contained in the fibrous structural body 135 is to increase the reflection factor of the fibrous structural body 135 by facilitating the diffuse reflection of light. The display layer 17 thereby has a high contrast.

The fibrous structural body 135 above may be made of, for example, one or more types of a polymeric material, an inorganic material, or the like, but may be made of any other material. Examples of the polymeric material may include nylon, polylactic acid, polyamide, polyimide, polyethylene terephthalate, polyacrylonitrile, polyethylene oxide, polyvinyl carbazole, polyvinyl chloride, and polyurethane. Examples of the polymeric material may include polystyrene, polyvinyl alcohol, polysulfone, polyvinyl pyrrolidone, polyvinylidene fluoride, poly hexafluoropropylene, cellulose acetate, collagen, gelatin, chitosan, and a copolymer thereof. Examples of the inorganic material may include titanium oxide. Among these exemplary materials, in particular, the polymeric material may be preferred. A reason is that the polymeric material prevents unexpected degradation reaction of the fibrous structural body 135 because of its low reactivity (optical reactivity, etc.), or chemical stability. If the fibrous structural body 135 is made of a highly reactive material, the surface of the fibrous structural body 135 may preferably be coated with any protective layer (not shown).

Although there is no specific limitation on fibers configuring the fibrous structural body 135, the length of each fiber may be much larger than its fiber diameter, as described above. More specifically, the fibers configuring the fibrous structural body 135 may be straight, twisted, or bent or curved midway. Alternatively, the fibers configuring the fibrous structural body 135 do not necessarily have to extend in only one direction, but may be branched midway to extend in one or more directions. Although being not limited especially, a method of forming the fibrous structural body 135 may preferably be, for example, a phase separation method, a phase inverse method, an electrostatic (electric field) spinning method, a melt spinning method, a wet spinning method, a dry spinning method, a gel spinning method, a sol gel method, a spray coating method, or the like. A reason is that these methods enable a fibrous material with its length being much larger than its fiber diameter to be formed easily and stably.

Although being not limited especially, the average fiber diameter of the fibrous structural body 135 may preferably be as small as possible, in which case light is diffusely reflected easily and the pore diameter of each fine pore 136 is increased. It is, however, necessary to determine the average fiber diameter such that the fibrous structural body 135 is able to hold the third elements 137. In consideration of this, the average fiber diameter of the fibrous structural body 135 may preferably be, for example, about 10 micrometers or less. In addition, although being not limited especially, the lower limit of the average fiber diameter may be, for example, about 0.1 micrometers or less. This average fiber diameter may be measured through a microscopic observation, for example, using a scanning electron microscope or the like. It is to be noted that the average length of the fibrous structural body 135 may be determined arbitrarily.

Specifically, the fibers configuring the fibrous structural body 135 may be nanofibers. This is because the nanofibers diffusely reflect light easily, increasing the reflection factor of the fibrous structural body 135, and increases an occupied proportion of the fine pores 136 in each unit volume, facilitating the movement of the third elements 137 via the fine pores 136. Consequently, the contrast is further increased, and energy necessary to move the first elements 131 is further decreased. A nanofiber refers to a fibrous material with a fiber diameter of about 0.001 micrometers to 0.1 micrometers and its length is at least 100 times the fiber diameter. Such a nanofiber may preferably be formed through an electrospinning method, because this method enables the fibrous structural body 135 with a small fiber diameter to be formed easily and stably.

The fibrous structural body 135 may preferably differ in reflection property from the first elements 131. More specifically, although there is no specific limitation on the reflection property of the fibrous structural body 135, the overall fibrous structural body 135 is preferably able to shield at least the first elements 131. A reason is that the difference in reflection property between the first elements 131 and the fibrous structural body 135, as described above, makes a contrast. For this reason, the fibrous structural body 135 that transmits light (e.g., colorless and transparent fibrous structural body 135) in the dispersion medium 133 is not preferred. However, if the reflection property of the fibrous structural body 135 is determined by that of non-migration particles 22, it may have an arbitrary value.

Although being not limited especially, the average pore diameter of the fine pores 136 may preferably be as large as possible, because the fine pores 136 with a large diameter facilitates the movement of the first elements 131 via the fine pores 136. For this reason, the average pore diameter of the fine pores 136 may preferably be, for example, about 0.01 micrometers to 10 micrometers. In addition, although being not limited especially, the thickness of the fibrous structural body 135 may be, for example, about 5 micrometers to 100 micrometers, because this thickness enhances the shielding property of the fibrous structural body 135, and facilitates the movement of the first elements 131 via the fine pores 136.

The third elements 137 are held (fixed) by the fibrous structural body 135, and are not particles that electrically migrate. A material forming each third element 137 is the same as that forming each first element 131, and is selected depending on a role that the third elements 137 play, as will be described below. The third elements 137 may be partially exposed from the fibrous structural body 135 or embedded therein, as long as being held by the fibrous structural body 135.

Each third element 137 differs in reflection property from each first element 131. Although there is no limitation on the reflection property of the third elements 137, the overall fibrous structural body 135 is preferably able to shield at least the first elements 131. A reason is that the difference in reflection property between the first elements 131 and the fibrous structural body 135, as described above, makes a contrast.

A material forming each third element 137 is selected depending on a role which the third elements 137 play for the purpose of making the contrast. More specifically, if the third elements 137 are used for a light-colored display, their material is the same as that of the first elements 131 to be used for a light-colored display. If the third elements 137 are used for a dark-colored display, their material is the same material as that of the first elements 131 to be used for a dark-colored display. When the third elements 137 are used for a dark-colored display, a metal oxide may preferably be selected from among the above materials, as a material of the third elements 137. A reason is that the third elements 137 made of a metal oxide are able to provide superior chemical stability, fixing characteristics, and optical reflection property. As long as it is possible to make a contrast, the material forming each third element 137 may be either the same as or differ from that forming each first element 131.

### (Behavior)

FIG. 19 shows an exemplary behavior of the display layer 17 when a magnetic field H is input into the display layer 17. The first elements 131 are magnetic bodies, as described above. Accordingly, a magnetic field H input from the pen 30 exerts a magnetic force on the first elements 131 in a direction from the lower electrode 12 to the upper electrode 14. As a result, the first elements 131 are displaced toward the upper electrode 14 (or the upper substrate 15) via the fine pores 136 in the fibrous structural body 135, and are brought into contact with or are positioned close to the upper electrode 14. The fibrous structural body 135 is not displaced particularly due to the magnetic field H input from the pen 30. However, the upper surface of the fibrous structural body 135 is covered and hidden by the first elements 131, because of the gathering of the first elements 131 close to the upper electrode 14. Thus, when the pen 30 makes contact with the display surface 10A, the part of the display surface 10A with which the pen 30 has made contact shows a dark-colored display (e.g., black display).

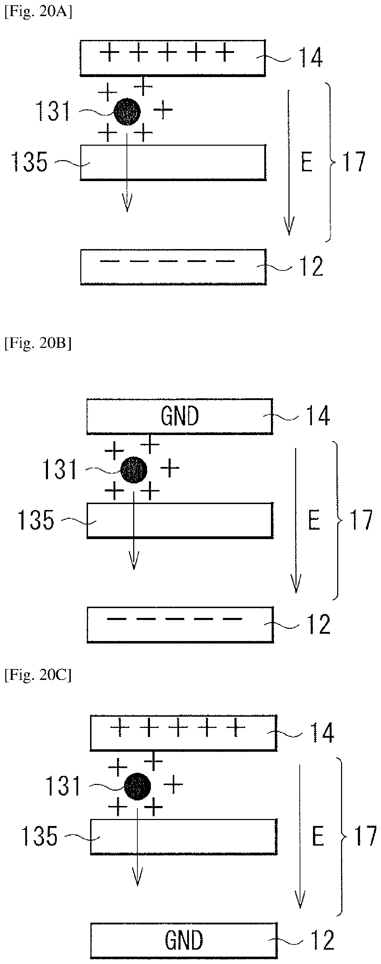

FIGs. 20A, 20B, and 20C show exemplary behaviors of the display layer 17 when an electric field E is input into the display layer 17. FIGs. 20A to 20C show exemplary behaviors of the display layer 17 in the case where the first elements 131 are positively charged. In the case where the first element 131 are positively charged, the drive section 20 applies a voltage between the upper electrode 14 and the lower electrode 12, such that the potential of the upper electrode 14 becomes higher than that of the lower electrode 12. To give an example, as shown in FIG. 20A or 20C, the drive section 20 may apply a positive voltage to the upper electrode 14, and a negative voltage or ground voltage (0 V) to the lower electrode 12. To give another example, as shown in FIG. 20B, the drive section 20 may apply a ground voltage (0 V) to the upper electrode 14, and a negative voltage to the lower electrode 12. To give sill another example, the drive section 20 may apply a positive voltage to the upper electrode 14, and a lower positive voltage than that applied to the upper electrode 14 to the lower electrode 12. To give further another example, the drive section 20 may apply a negative voltage to the upper electrode 14, and a lower negative voltage than that applied to the upper electrode 14 to the lower electrode 12. In this way, an electric field E directed from the upper electrode 14 to the lower electrode 12 is generated in the display layer 17. In response, the electric field E input from both the lower electrode 12 and the upper electrode 14 exerts a Coulomb force on the first elements 131 in directions from the upper electrode 14 to the lower electrode 12. As a result, the first elements 131 are displaced toward the lower electrode 12 (or the lower substrate 11) via the fine pores 136 in the fibrous structural body 135, and therefore make contact with or are positioned close to the lower electrode 12. The fibrous structural body 135 is not displaced particularly due to the electric field E, but the upper surface of the second element 135 is exposed, because of the gathering of the first elements 131 close to the lower electrode 12. Thus, when the voltage described above is applied between the upper electrode 14 and the lower electrode 12, the display layer 17 entirely or partially shows a light-colored display (e.g., white display).

To sum up the above, the display layer 17 is able to change its display (make drawings), by virtue of the displacement of the first elements 131 which is caused by the magnetic field H input from the pen 30. In this case, the first elements 131 and the third elements 137 move in each of the display pixels 16A partitioned by the spacer 16B. This makes it possible to reduce a variation in the reflection factor of the display surface 10A. In the display layer 17, the first elements 131 are displaced due to the electric field E input from both the lower electrode 12 and the upper electrode 14. This makes it possible to change (erase) the display while reducing a variation in the reflection factor of the display surface 10A.

### (Effect)

Next, a description will be given of effects of the display unit 3. The display unit 3 changes a display of the display layer 17 by virtue of the electric field E input from both the upper electrode 14 and the lower electrode 12. It is thus possible to utilize the electric field E input from both the upper electrode 14 and the lower electrode 12 when erasing a display of the display layer 17. For example, entirely inputting the electric field E into the display layer 17 enables the overall display surface 10A to be cleared at one time. In addition, since the electric field E is utilized to clear the display surface 10A, it is possible to reduce a risk that drawings may be left unerased, compared with utilizing a magnetic field to clear the surface.

The display unit 3 changes a display of the display layer 17 by virtue of the magnetic field H input from the pen 30. It is therefore possible to utilize the magnetic field H input from the pen 30 in order to make drawings on the display surface 10A. Inputting the magnetic field H from the pen 30 makes it possible to increase the speed of a response to make drawings on the display surface 10A. Thus, if the display unit 3 utilizes the magnetic field H to make drawings and the electric field E to clear the display surface 10A, it is possible to provide a display unit that enables drawings to be made at a fast speed and to be entirely erased at one time, and that reduces a risk that the drawings may be left unerased.

If one of both of the upper electrode 14 and the lower electrode 12 in the display unit 3 are configured with the plurality of partial electrodes (12A and 14A), a part of the display layer 17 which is interposed between the upper electrode 14 and the lower electrode 12 facing each other serves as pixels to be driven in the matrix driving manner. Accordingly, by setting the potential difference between the upper electrode 14 and the lower electrode 12 for predetermined ones of the pixels to be driven in the matrix driving manner greater than the threshold potential difference above, it is possible to clear only a predetermined region on the display surface 10A. Furthermore, by setting the potential difference between the upper electrode 14 and the lower electrode 12 for all the pixels to be driven in the matrix driving manner greater than the threshold potential difference, it is possible to clear the overall display surface 10A. Thus, by configuring one or both of the upper electrode 14 and the lower electrode 12 in the display unit 3 with the plurality of partial electrodes (12A and 14A), it is possible to partially clear the display surface 10A or clear the overall display surface 10A at one time. In this case, it is accordingly possible to provide a display unit that enables drawings to be made at a fast speed and to be erased entirely at one time or partially, and that reduces a risk that the drawings may be left unerased.

If the upper substrate 15 and the upper electrode 14 are each made of a material having low stiffness and the drive section 20 applies a lower voltage difference than the above threshold, between the upper electrode 14 and the lower electrode 12, the following partial clear is possible. More specifically, a user pushes a nonmagnetic bar (e.g., the end of the pen 30 opposite the nib) or the like against a part of the display surface 10A which he or she will clear. In response to this, the thickness of the display layer 13 is partially decreased, and therefore the intensity of the electric field E partially exceeds the above threshold. Partially increasing the electric field E in this manner also makes it possible clear only a predetermined region on the display surface 10A.

### (5. Modification of Third Embodiment)

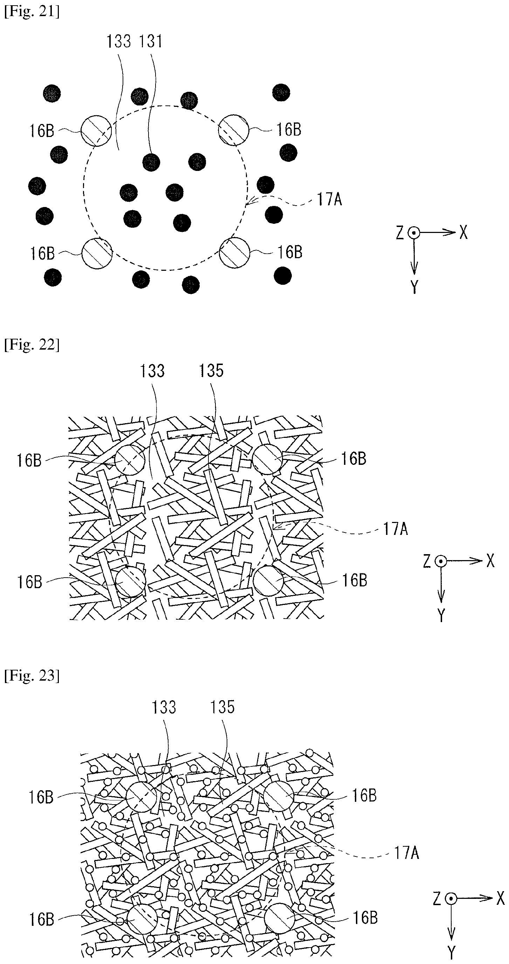

FIG. 21 shows a modification of a cross-sectional configuration of the display pixel 17A in the third embodiment, along a plane parallel to the XY plane and taken along the arrow A-A in FIG. 15. FIGs. 22 and 23 show exemplary cross-sectional configurations of the display pixel 17A along a plane parallel of the XY plane and taken along the arrow B-B.

In the third embodiment described above, a spacer 16B may have a pillar shape, for example, as shown in FIGs. 21, 22, and 23. In this case, the spacer 16B does not spatially separate the dispersion medium 133 into a plurality of regions, and plays only a limited role of restricting the gap between the pair of substrates (the lower substrate 11 and the upper substrate 15). This configuration reduces an occupied proportion of the spacer 16B in the display layer 17, thus enabling the display unit 3 to have more flexibility.

### (6. Fourth Embodiment)

### (Configuration)

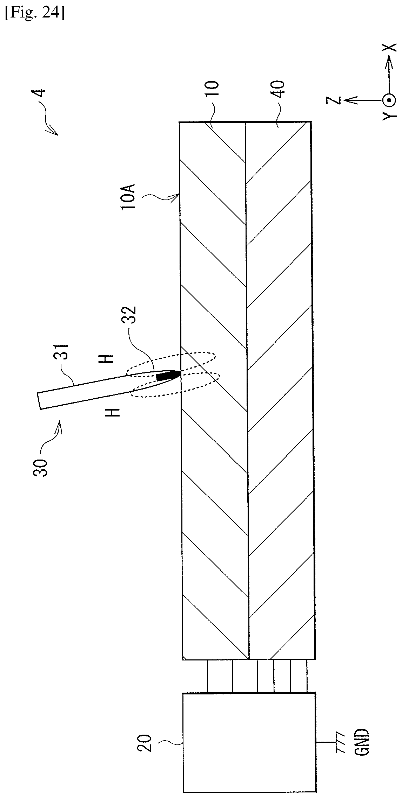

FIG. 24 shows an exemplary cross-sectional configuration of a display unit 4 according to a fourth embodiment of the present technology. The display unit 4 is configured by providing a sensor device 40 on the rear of the display panel 10 in any one of the above display units 1, 2, and 3 according to the embodiments and their modifications. In the display unit 4, the drive section 20 drives the sensor device 40 in addition to the display panel 10. Accordingly, a detailed description of the sensor device 40 and the drive section 20 will be mainly given below, and features common to the display unit 4 and any one of the display units 1, 2, and 3 and their modifications will be skipped as appropriate.

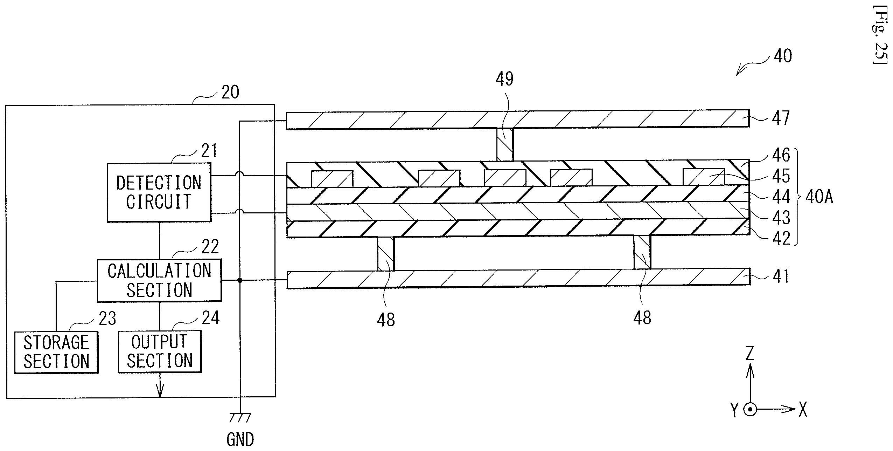

FIG. 25 shows a cross-sectional configuration of the sensor device 40, and a functional block of the drive section 20. The sensor device 40 is provided in contact with the lower substrate 11, and detects a pressure at which the pen 30 pushes the upper substrate 15. The sensor device 40 is of a capacitance type, and has a configuration, for example, in which an electrode substrate 40A is sandwiched vertically between conductive layers 41 and 47. The electrode substrate 40A includes, for example, an insulation layer 42, a plurality of lower electrodes 43, an insulation layer 44, a plurality of upper electrodes 45, and an insulation layer 46 in this order, from the conductive layer 41 side. The sensor device 40 has, for example, a gap between the conductive layer 41 and the electrode substrate 40A, and a plurality of spacers 48 that maintain this gap. In addition, the sensor device 40 also has a gap, for example, between the conductive layer 47 and the electrode substrate 40A, and a plurality of spacers 49 that maintain this gap. The plurality of spacers 48 and 49 are arranged so as not to overlap one another, as seen along a thickness direction of the sensor device 40.

The conductive layers 41 and 47 function as shield layers that prevent a variation in a capacitance created between the sensor device 40 and its outside from affecting the interior of the sensor device 40. The conductive layers 41 and 47 are each kept at a fixed potential, for example, a ground potential. The conductive layers 41 and 47 may each be configured with, for example, a metal plate made of SUS or iron. The conductive layers 41 and 47 may each be configured, for example, by forming, on a film, a thin metal film made of aluminum or the like, or a film made of carbon, CNT, ITO, IZO, a nano-metal-wire, a narrow silver wire, or the like. For example, the conductive layer 47 may also serve as the lower electrode 12. In this case, the lower substrate 11 may be provided instead of the spacers 49, or between the spacers 49 and the conductive layer 47.

The lower electrodes 43 are disposed at locations opposing the conductive layer 41. The lower electrodes 43 may be a plurality of partial electrodes extending in a third direction (an X direction in FIG. 25). Specifically, the lower electrodes 43 and the conductive layer 41 are configured to detect a change in a capacitance at coordinates in a fourth direction (a Y direction in FIG. 25) that is orthogonal to the third direction. The upper electrodes 45 are disposed at locations opposing the conductive layer 47. The upper electrodes 45 may be a plurality of partial electrodes extending in the fourth direction (the Y direction in FIG. 25). Specifically, both the upper electrodes 45 and the conductive layer 47 are configured to detect a change in a capacitance at coordinates in the third direction (the X direction in FIG. 25). The lower electrodes 43 and the upper electrodes 45 may each be configured, for example, by forming, on a film, a thin metal film made of aluminum or the like, or a film made of carbon, CNT, ITO, IZO, a nano-metal-wire, a narrow silver wire, or the like.

The insulation layer 42 electrically separates the conductive layer 41 from the lower electrodes 43. The insulation layer 44 electrically separates the lower electrodes 43 from the upper electrode 45. The insulation layer 46 electrically separates the upper electrodes 45 from the conductive layer 47. The insulation layer 42, the insulation layer 44, and the insulation layer 46 may each be made of, for example, a hard coat agent to be screen-printed and cured with UV light or on heating. Alternatively, the insulation layer 46 may also be formed, for example, by patterning a spin-coated light-sensitive resin through a photolithographic technique.

The drive section 20 in the fourth embodiment generates drawing date on the basis of an output from the sensor device 40, and outputs the generated drawing data to the outside. As shown in FIG. 25, for example, the drive section 20 includes a detection circuit 21, a calculation section 22, a storage section 23, and an output section 24.

For example, the detection circuit 21 senses a change in the capacitance of the sensor device 40 from a change in a current flowing through the electrode substrate 40A. The detection circuit 21 includes, for example, a switching device that switches the plurality of lower electrodes 43 and upper electrodes 45 contained in the electrode substrate 40A, a signal source that supplies an AC signal to the electrode substrate 40A, and a current-voltage conversion circuit. The switching device may be, for example, a multiplexer. A plurality of terminals provided on one side of the multiplexer are connected one by one to the corresponding ends of the lower electrodes 43 and upper electrodes 45, whereas a single terminal provided on the other side of the multiplexer is connected to the signal source and the current-voltage conversion circuit.

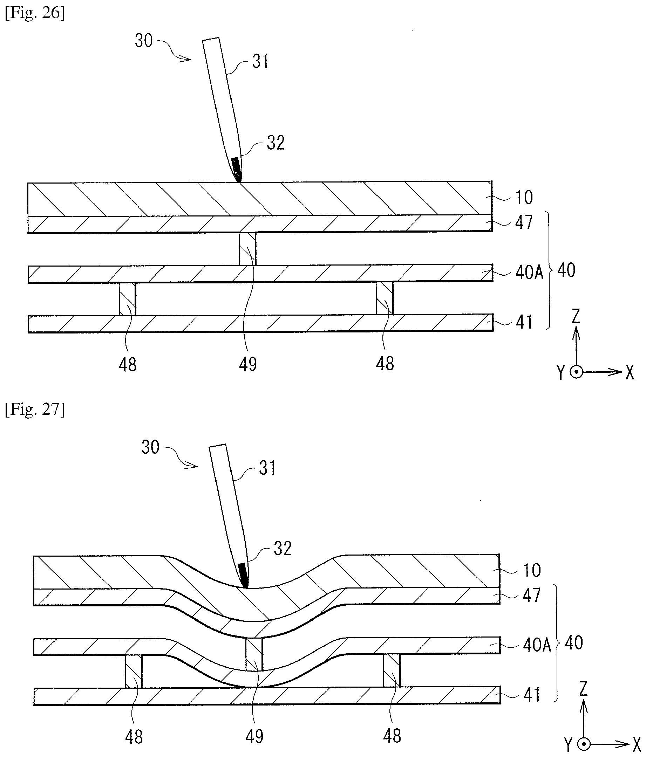

For example, the detection circuit 21 sequentially selects each one of the plurality of lower electrodes 43, and each one of the plurality of upper electrodes 45. Because of this selection manner, the detection circuit 21 sequentially applies an AC signal to each one of the plurality of lower electrodes 43 and to each one of the plurality of upper electrodes 45. When the pen 30 is brought into contact with or pushed against the display surface 10A, for example, as shown in FIG. 26 or 27, the capacitance of the electrode substrate 40A is changed, which causes the change in the current flowing through the electrode substrate 40A. In response, for example, the detection circuit 21 converts this current change into a voltage change, and outputs this voltage change to the calculation section 22. When the pen 30 is brought into contact with the display surface 10A, the electrode substrate 40A slightly changes its shape, causing a change in the capacitance of the electrode substrate 40A. In FIG. 26, exemplary cross-sectional configurations of the display panel 10 and the sensor device 40 are schematically illustrated when the pen 30 is brought into contact with the display surface 10A; in FIG. 27, exemplary cross-sectional configurations of the display panel 10 and the sensor device 40 are schematically illustrated when the pen 30 is pushed against the display surface 10A.

The calculation section 22 detects a location at which the pen 30 is brought into contact with or is pushed against the display surface 10A, by assessing the change in the output voltage of the detection circuit 21. Furthermore, the calculation section 22 derives a pressure at which the pen 30 is pushed against the display surface 10A, from the assessment of the output voltage change in the detection circuit 21. The calculation section 22 creates the drawing data by superimposing the derived location data (addendum date generated on the basis of the output from the sensor device 40) on drawing date stored in the storage section 23. The calculation section 22 stores, in the storage section 23, the drawing data that has been created by superimposing the derived location data (addendum date generated on the basis of the output from the sensor device 40) on the drawing date stored in the storage section 23, and outputs the drawing data to the output section 24. The storage section 23 stores the drawing data from the calculation section 22; the output section 24 outputs the drawing data from the calculation section 22 to the outside.

### (Effect)

Next, a description will be given of effects of the display unit 4. The display unit 4 makes drawings on the display panel 10 by utilizing the electric field E and the magnetic field H. It is therefore possible to clear the overall surface of the display surface 10A at one time, for example, by utilizing the electric field E. In this case, since the electric field E is utilized to clear the display surface 10A, it is possible to reduce a risk that drawings may be left unerased, compared with utilizing a magnetic field to clear the surface. Moreover, it is possible to utilize the magnetic field H input from the pen 30 in order to make drawings on the display surface 10A. Inputting the magnetic field H from the pen 30 makes it possible to increase the speed of a response to make drawings on the display surface 10A. Thus, if the display unit 4 utilizes the magnetic field H to make drawings and the electric field E to clear the display surface 10A, it is possible to provide a display unit that enables drawings to be made at a fast speed and to be entirely erased at one time, and that reduces a risk that the drawings may be left unerased.

By configuring one or both of the upper electrode 14 and the lower electrode 12 in the display unit 4 with the plurality of partial electrodes (12A and 14A), it is possible to partially clear the display surface 10A or clear the overall display surface 10A at one time. In this case, it is accordingly possible to provide a display unit that enables drawings to be made at a fast speed and to be erased entirely at one time or partially, and that reduces a risk that the drawings may be left unerased.

The sensor device 40 in the display unit 4 generates the drawing data that correspond to an image created on the display surface 10A of the display panel 10. More specifically, when drawings are created on the display surface 10A by the pen 30, the sensor device 40 detects the contact of the pen 30 on the display surface 10A or the pushing of the pen 30 against the display surface 10A, and then generates the drawing data by using this detection result. This means that the presence of the display panel 10 does not disturb the generation of the drawing data above. This is because the sensor device 40 detects the contact of the pen 30 on the display surface 10A or the pushing of the pen 30 against the display surface 10A by using a change in a capacitance created between the electrode substrate 40A and each of the conductive layers 41 and 47, while the electrode substrate 40A is electrically shielded by the conductive layers 41 and 47.

The generation of the drawing data in the display unit 4 synchronizes the display of the drawing on the display panel 10. However, both the generation of the drawing data in the display unit 4 and the display of the drawing on the display panel 10 are triggered by the contact of the pen 30 on the display surface 10A or the pushing of the pen 30 against the display surface 10A. Therefore, no date is transferred from the display panel 10 to the sensor device 40 or from the sensor device 40 to the display panel 10. Thus, it is not necessary to provide an extra synchronizing circuit, contributing to the simplification of the circuit configuration in the display unit 4.

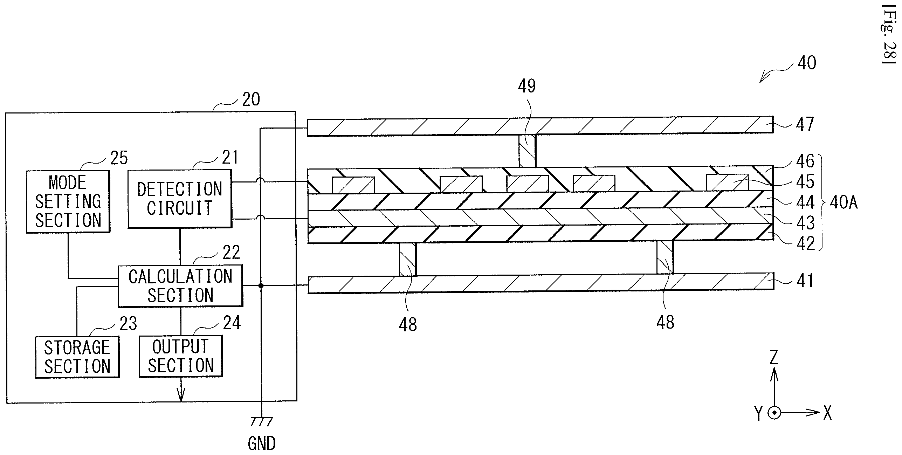

The display unit 4 may further include a mode setting section 25 that sets a mode (erasing mode) of erasing an image created on the display surface 10A, for example, as shown in FIG. 28. In FIG. 28, an example in which the mode setting section 25 is provided in the drive section 20 is illustrated; however the mode setting section 25 may be provided in the display panel 10 or the sensor device 40. The mode setting section 25 may have an interface button through which the erasing mode is set. In the erasing mode, when a part of the display surface 10A which will be cleared is pushed by a nonmagnetic bar (e.g., the end of the pen 30 opposite the nib), the drive section 20 identifies the pushed location as a location intended for erasure, on the basis of the output from the sensor device 40. In addition, the drive section 20 applies a voltage between the upper electrode 14 and the lower electrode 12 so as to erase an image on the display surface 10A at the location intended for erasure (erasing location). In this way, it is also possible to partially clear the display surface 10A.

### Reference Signs List

1, 2, 3, 4 Display unit
10 Display panel
10A Display surface
11 Lower substrate
12, 43 Lower electrode
12A, 14A Partial electrode
13, 16, 17 Display layer
13A, 16A, 17A Display pixel 13A
14, 45 Upper electrode
15 Upper substrate
16B, 48, 49 Spacer
20 Drive section
21 Detection circuit
22 Calculation section
23 Storage section
24 Output section
25 Mode setting section
30 Pen
31 Grip
32 Magnet
40 Sensor device
40A Electrode substrate
41, 47 Conductive layer
42, 44, 46 Insulation layer
131 First elements
132 Second element
133 Dispersion medium
134 Microcapsule
135 Fibrous structural body
136 Fine pore
137 Third element
E Electric field
GND Ground potential
H Magnetic field

## Claims

1. A display unit, comprising:
a display panel (10), the display panel (10) comprising:
a first electrode layer (14) electrically connected to a second electrode layer (12); and
a display layer (13) formed between the first and second electrode layers (12, 14), the display layer (13) including a plurality of magnetic particles (131) and nonmagnetic particles (132),
a pen (30) configured to apply a magnetic field (H) to the display layer (13) to make drawings on a display surface (10A) of the display panel (10), when the pen (30) is brought into contact or being pushed against the display surface (10A) of the display panel (10);
a drive section (20) configured to apply a voltage to the first and second electrode layers (12, 14) to generate an electric field (E) in the display layer (13) to erase the overall display of the display surface (10A) or a part of the display of the display surface (10A) of the display panel (10), **characterized in that**
both of the magnetic particles (131) and the nonmagnetic particles (132) are electrically modified to enable movement of said particles within the display layer (13) in response to an applied electric field between the first and second electrode layers (12, 14), and the polarity of charging of the magnetic particles (131) is different from the polarity of charging of the nonmagnetic particles (132).

2. The display unit according to Claim 1, wherein the first electrode layer (14) includes a plurality of first partial electrodes (14A) extending in a first direction, and the second electrode layer (12) includes a plurality of second partial electrodes (12A) extending in a second direction that intersects with the first direction.

3. The display unit according to Claim 1, wherein the first electrode layer (14) is a sheet-shaped electrode, and the second electrode layer (12) includes a plurality of partial electrodes (12A) arranged two-dimensionally within a plane of the second electrode layer (12A).

4. The display unit according to Claim 1, wherein the first and second electrode layers (12, 14) include a plurality of display elements, each display element including a plurality of the magnetic particles (131) and a plurality of the nonmagnetic particles (132).

5. The display unit according to Claim 4, wherein each display element includes a dispersion medium (133), a plurality of the magnetic and nonmagnetic particles (131, 132) provided in the dispersion medium (133), and a microcapsule (134) that encapsulates the dispersion medium (133) and the plurality of magnetic and nonmagnetic particles (131, 132).

6. The display unit according to Claim 1, wherein the magnetic material of the magnetic particles (131) has one of a dark color or a light color, and the nonmagnetic material of the non-magnetic particles (132) has the other of the dark color and the light color.

7. The display unit according to Claim 1, wherein the magnetic particles (131) are electrically modified to be positively charged, wherein the nonmagnetic particles (132) are electrically modified to be negatively charged.

8. The display unit according to Claim 1, wherein the display layer (13) includes at least one spacer (16B) that divides the display layer (13) into a plurality of display pixels (13A), each display pixel (13A) including a dispersion medium (133), and a plurality of the magnetic and nonmagnetic particles (131, 132) provided in the dispersion medium (133).

9. The display unit according to Claim 8, wherein the spacer (16B) is formed such that the display pixels (13A) are fluidly connected to one another, or wherein the spacer (16B) is formed such that the display pixels (13A) are not fluidly connected to one another.

10. The display unit according to claim 1, further comprising a sensor device (40) arranged on a rear side of the display panel (10), wherein the sensor device (40) is configured to detect contact of the pen (30) on the display surface (10A) or pushing of the pen (30) against the display surface (10A) and to generate drawing data by using the detection result.

11. The display unit according to claim 10, wherein the drawing data generated by the sensor device (40) correspond to a drawing made on the display surface (10A), wherein both the generation of the drawing data by the sensor device (40) and the drawing made on the display surface (10A) are triggered by the contact of the pen (30) on the display surface (10A) or the pushing of the pen (30) against the display surface (10A), without data transfer from the display panel (10) to the sensor device (40) and vice versa.

12. The display unit according to Claim 10, wherein the sensor device (40) includes a capacitance type pressure sensor.

13. The display unit according to Claim 10, wherein the sensor device (40) includes an electrode substrate (40A) formed between first and second sensor conductive layers (41, 47).

14. The display unit according to Claim 13, wherein the electrode substrate (40A) includes:
a first insulation layer (42);
a plurality of lower sensor electrodes (43);
a second insulation layer (44);
a plurality of upper sensor electrodes (45); and
a third insulation layer (46).

## Patentansprüche

1. Anzeigeeinheit, umfassend:
eine Anzeigetafel (10), wobei die Anzeigetafel (10) umfasst:
eine erste Elektrodenschicht (14), die elektrisch mit einer zweiten Elektrodenschicht (12) verbunden ist; und
eine Anzeigeschicht (13), die zwischen der ersten und zweiten Elektrodenschicht (12, 14) gebildet ist, wobei die Anzeigeschicht (13) mehrere magnetische Teilchen (131) und unmagnetische Teilchen (132) enthält,
einen Stift (30), der dazu ausgebildet ist, ein Magnetfeld (H) an die Anzeigeschicht (13) anzulegen, um Zeichnungen auf einer Anzeigeoberfläche (10A) der Anzeigetafel (10) vorzunehmen, wenn der Stift (30) in Kontakt mit der Anzeigeoberfläche (10A) der Anzeigetafel (10) gebracht oder dagegen gedrückt wird,
einen Ansteuerabschnitt (20), der dazu ausgebildet ist, eine Spannung an die erste und zweite Elektrodenschicht (12, 14) anzulegen, um ein elektrisches Feld (E) in der Anzeigeschicht (13) zu generieren, um die Gesamtanzeige der Anzeigeoberfläche (10A) oder einen Teil der Anzeige der Anzeigeoberfläche (10A) der Anzeigetafel (10) zu löschen, **dadurch gekennzeichnet, dass**
sowohl die magnetischen Teilchen (131) als auch die unmagnetischen Teilchen (132) elektrisch modifiziert sind, um eine Bewegung der Teilchen innerhalb der Anzeigeschicht (13) als Reaktion auf ein angelegtes elektrisches Feld zwischen der ersten und zweiten Elektrodenschicht (12, 14) zu ermöglichen,
und die Polarität des Ladens der magnetischen Teilchen (131) von der Polarität des Ladens der unmagnetischen Teilchen (132) verschieden ist.

2. Anzeigeeinheit nach Anspruch 1, wobei die erste Elektrodenschicht (14) mehrere erste Teilelektroden (14A) enthält, die sich in einer ersten Richtung erstrecken, und die zweite Elektrodenschicht (12) mehrere zweite Teilelektroden (12A) enthält, die sich in einer zweiten Richtung erstrecken, die die erste Richtung schneidet.

3. Anzeigeeinheit nach Anspruch 1, wobei die erste Elektrodenschicht (14) eine folienförmige Elektrode ist und die zweite Elektrodenschicht (12) mehrere Teilelektroden (12A) enthält, die zweidimensional innerhalb einer Ebene der zweiten Elektrodenschicht (12A) angeordnet sind.

4. Anzeigeeinheit nach Anspruch 1, wobei die erste und zweite Elektrodenschicht (12, 14) mehrere Anzeigeelemente enthalten, wobei jedes Anzeigeelement mehrere der magnetischen Teilchen (131) und mehrere der unmagnetischen Teilchen (132) enthält.

5. Anzeigeeinheit nach Anspruch 4, wobei jedes Anzeigeelement ein Dispersionsmedium (133), mehrere der in dem Dispersionsmedium (133) vorgesehenen magnetischen und unmagnetischen Teilchen (131, 132) und eine Mikrokapsel (134), die das Dispersionsmittel (133) und die mehreren magnetischen und unmagnetischen Teilchen (131, 132) kapselt, enthält.

6. Anzeigeeinheit nach Anspruch 1, wobei das magnetische Material der magnetischen Teilchen (131) eine einer dunklen Farbe oder einer hellen Farbe aufweist und das unmagnetische Material der unmagnetischen Teilchen (132) die andere der dunklen Farbe und der hellen Farbe aufweist.

7. Anzeigeeinheit nach Anspruch 1, wobei die magnetischen Teilchen (131) elektrisch modifiziert sind, um positiv geladen zu sein, wobei die unmagnetischen Teilchen (132) elektrisch modifiziert sind, um negativ geladen zu sein.

8. Anzeigeeinheit nach Anspruch 1, wobei die Anzeigeschicht (13) mindestens einen Abstandshalter (16B) enthält, der die Anzeigeschicht (13) in mehrere Anzeigepixel (13A) unterteilt, wobei jedes Anzeigepixel (13A) ein Dispersionsmedium (133) enthält und mehrere der magnetischen und unmagnetischen Teilchen (131, 132) in dem Dispersionsmedium (133) vorgesehen sind.

9. Anzeigeeinheit nach Anspruch 8, wobei der Abstandshalter (16B) derart gebildet ist, dass die Anzeigepixel (13A) fluidisch miteinander verbunden sind, oder wobei der Abstandshalter (16B) derart gebildet ist, dass die Anzeigepixel (13A) nicht fluidisch miteinander verbunden sind.

10. Anzeigeeinheit nach Anspruch 1, weiterhin umfassend eine Sensoreinrichtung (40), die auf einer Rückseite der Anzeigetafel (10) angeordnet ist, wobei die Sensoreinrichtung (40) dazu ausgebildet ist, einen Kontakt des Stifts (30) auf der Anzeigeoberfläche (10A) oder das Drücken des Stifts (30) gegen die Anzeigeoberfläche (10A) zu detektieren und Zeichendaten unter Verwendung des Detektionsergebnisses zu generieren.

11. Anzeigeeinheit nach Anspruch 10, wobei die durch die Sensoreinrichtung (40) generierten Zeichnungsdaten einer auf der Anzeigeoberfläche (10A) vorgenommenen Zeichnung entsprechen, wobei sowohl die Generierung der Zeichnungsdaten durch die Sensoreinrichtung (40) als auch die auf der Anzeigeoberfläche (10A) vorgenommene Zeichnung durch den Kontakt des Stifts (30) auf der Anzeigeoberfläche (10A) oder das Drücken des Stifts (30) gegen die Anzeigeoberfläche (10A) ausgelöst werden, ohne Datentransfer von der Anzeigetafel (10) zu der Sensoreinrichtung (40) und umgekehrt.

12. Anzeigeeinheit nach Anspruch 10, wobei die Sensoreinrichtung (40) einen Drucksensor vom Kapazitätstyp enthält.

13. Anzeigeeinheit nach Anspruch 10, wobei die Sensoreinrichtung (40) ein Elektrodensubstrat (40A) enthält, das zwischen der ersten und zweiten Sensorleitfähigen Schicht (41, 47) ausgebildet ist.

14. Anzeigeeinheit nach Anspruch (13), wobei das Elektrodensubstrat (40A) enthält:
eine erste Isolationsschicht (42);
mehrere untere Sensorelektroden (43);
eine zweite Isolationsschicht (44);
mehrere obere Sensorelektroden (45); und
eine dritte Isolationsschicht (46).

## Revendications

1. Unité d'affichage, comprenant :
un panneau d'affichage (10), le panneau d'affichage (10) comprenant :
une première couche d'électrode (14) connectée électriquement à une deuxième couche d'électrode (12) ; et
une couche d'affichage (13) formée entre les première et deuxième couches d'électrode (12, 14), la couche d'affichage (13) incluant une pluralité de particules magnétiques (131) et de particules non magnétiques (132),
un stylet (30) configuré pour appliquer un champ magnétique (H) à la couche d'affichage (13) pour effectuer des dessins sur une surface d'affichage (10A) du panneau d'affichage (10), lorsque le stylet (30) est amené en contact ou est poussé contre la surface d'affichage (10A) du panneau d'affichage (10) ;
une section d'excitation (20) configurée pour appliquer une tension aux première et deuxième couches d'électrode (12, 14) afin de générer un champ électrique (E) dans la couche d'affichage (13) pour effacer l'affichage total de la surface d'affichage (10A) ou une partie de l'affichage de la surface d'affichage (10A) du panneau d'affichage (10), **caractérisée en ce qu'**à la fois les particules magnétiques (131) et les particules non magnétiques (132) sont modifiées électriquement pour permettre le mouvement desdites particules au sein de la couche d'affichage (13) en réaction à un champ électrique appliqué entre les première et deuxième couches d'électrode (12, 14), et la polarité de charge des particules magnétiques (131) est différente de la polarité de charge des particules non magnétiques (132).

2. Unité d'affichage selon la revendication 1, dans laquelle la première couche d'électrode (14) inclut une pluralité de premières électrodes partielles (14A) s'étendant dans une première direction, et la deuxième couche d'électrode (12) inclut une pluralité de deuxièmes électrodes partielles (12A) s'étendant dans une deuxième direction qui est en entrecroisement avec la première direction.

3. Unité d'affichage selon la revendication 1, dans laquelle la première couche d'électrode (14) est une électrode en forme de feuille, et la deuxième couche d'électrode (12) inclut une pluralité d'électrodes partielles (12A) agencées de manière bidimensionnelle au sein d'un plan de la deuxième couche d'électrode (12A).

4. Unité d'affichage selon la revendication 1, dans laquelle les première et deuxième couches d'électrode (12, 14) incluent une pluralité d'éléments d'affichage, chaque élément d'affichage incluant une pluralité des particules magnétiques (131) et une pluralité des particules non magnétiques (132).

5. Unité d'affichage selon la revendication 4, dans laquelle chaque élément d'affichage inclut un milieu de dispersion (133), une pluralité des particules magnétiques et non magnétiques (131, 132) étant prévues dans le milieu de dispersion (133), et une microcapsule (134) qui assure l'encapsulation du milieu de dispersion (133) et de la pluralité de particules magnétiques et non magnétiques (131, 132).

6. Unité d'affichage selon la revendication 1, dans laquelle le matériau magnétique des particules magnétiques (131) a une couleur parmi une couleur sombre ou une couleur claire, et le matériau non magnétique des particules non magnétiques (132) a l'autre couleur parmi la couleur sombre et la couleur claire.

7. Unité d'affichage selon la revendication 1, dans laquelle les particules magnétiques (131) sont modifiées électriquement afin d'être chargées en sens positif, dans laquelle les particules non magnétiques (132) sont modifiées électriquement afin d'être chargées en sens négatif.

8. Unité d'affichage selon la revendication 1, dans laquelle la couche d'affichage (13) inclut au moins un espaceur (16B) qui divise la couche d'affichage (13) en une pluralité de pixels d'affichage (13A), chaque pixel d'affichage (13A) incluant un milieu de dispersion (133), et une pluralité des particules magnétiques et non magnétiques (131, 132) étant prévues dans le milieu de dispersion (133).

9. Unité d'affichage selon la revendication 8, dans laquelle l'espaceur (16B) est formé de telle sorte que les pixels d'affichage (13A) soient connectés fluidiquement l'un à l'autre, ou dans lequel l'espaceur (16B) est formé de telle sorte que les pixels d'affichage (13A) ne soient pas connectés fluidiquement l'un à l'autre.

10. Unité d'affichage selon la revendication 1, comprenant en outre un dispositif capteur (40) agencé sur un côté arrière du panneau d'affichage (10), le dispositif capteur (40) étant configuré pour détecter un contact du stylet (30) sur la surface d'affichage (10A) ou la poussée du stylet (30) contre la surface d'affichage (10A) et pour générer des données de dessin grâce à l'utilisation du résultat de détection.

11. Unité d'affichage selon la revendication 10, dans laquelle les données de dessin générées par le dispositif capteur (40) correspondent à un dessin effectué sur la surface d'affichage (10A), dans laquelle à la fois la génération des données de dessin par le dispositif capteur (40) et le dessin effectué sur la surface d'affichage (10A) sont déclenchés par le contact du stylet (30) sur la surface d'affichage (10A) ou la poussée du stylet (30) contre la surface d'affichage (10A), sans un transfert de données à partir du panneau d'affichage (10) jusqu'au dispositif capteur (40) et vice versa.

12. Unité d'affichage selon la revendication 10, dans laquelle le dispositif capteur (40) inclut un capteur de pression de type à capacitance.

13. Unité d'affichage selon la revendication 10, dans laquelle le dispositif capteur (40) inclut un substrat d'électrode (40A) formé entre les première et deuxième couches conductrices de capteur (41, 47).

14. Unité d'affichage selon la revendication 13, dans laquelle le substrat d'électrode (40A) inclut :
une première couche d'isolement (42) ;
une pluralité d'électrodes de capteur inférieures (43) ;
une deuxième couche d'isolement (44) ;
une pluralité d'électrodes de capteur supérieures (45) ; et
une troisième couche d'isolement (46).
